(19) Europäisches Patentamt / European Patent Office / Office européen des brevets

(11) **EP 3 602 146 B1**

(12) **EUROPÄISCHE PATENTSCHRIFT**

(45) Veröffentlichungstag und Bekanntmachung des Hinweises auf die Patenterteilung:
**29.06.2022 Patentblatt 2022/26**

(21) Anmeldenummer: **18711309.7**

(22) Anmeldetag: **13.03.2018**

(51) Internationale Patentklassifikation (IPC):
**G01W 1/17** (2006.01) **F24F 11/30** (2018.01)

(52) Gemeinsame Patentklassifikation (CPC):
**G01W 1/17**

(86) Internationale Anmeldenummer:
**PCT/EP2018/056287**

(87) Internationale Veröffentlichungsnummer:
**WO 2018/177745 (04.10.2018 Gazette 2018/40)**

(54) **VERFAHREN UND VORRICHTUNG ZUR ERMITTLUNG DER WAHRSCHEINLICHKEIT FÜR EINEN SCHIMMELPILZ- UND/ODER FEUCHTESCHADEN IN EINEM GEBÄUDE**

METHOD AND APPARATUS FOR ASCERTAINING THE PROBABILITY OF MOULD AND/OR MOISTURE DAMAGE IN A BUILDING

PROCÉDÉ ET DISPOSITIF POUR LA DÉTERMINATION DE LA PROBABILITÉ DE DOMMAGES DUS À LA MOISISSURE ET/OU L'HUMIDITÉ DANS UN BÂTIMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2017 DE 102017106856**

(43) Veröffentlichungstag der Anmeldung:
**05.02.2020 Patentblatt 2020/06**

(73) Patentinhaber: **Techem Energy Services GmbH 65760 Eschborn (DE)**

(72) Erfinder:
• **BISCHOF, Wolfgang**
  **07743 Jena (DE)**
• **BRASCHE, Sabine**
  **99096 Erfurt (DE)**
• **HARTMANN, Thomas**
  **01705 Freital (DE)**
• **KÄHLER, Arne**
  **61350 Bad Homburg (DE)**
• **KLEIN, Joachim**
  **65760 Eschborn (DE)**
• **OHL, Jochen**
  **64823 Gross-Umstadt (DE)**

(74) Vertreter: **Keil & Schaafhausen Patentanwälte PartGmbB**
**Friedrichstraße 2-6**
**60323 Frankfurt am Main (DE)**

(56) Entgegenhaltungen:
**JP-A- H11 276 194 US-A1- 2005 156 746**

• **ZOLTÁN SADOVSKÝ ET AL: "Probabilistic modelling of mould growth in buildings", JOURNAL OF BUILDING PHYSICS, Bd. 37, Nr. 4, 24. Juli 2013 (2013-07-24), Seiten 348-366, XP055474544, ISSN: 1744-2591, DOI: 10.1177/1744259113496370**
• **VIITANEN H ET AL: "Mold Risk Classification Based on Comparative Evaluation of Two Established Growth Models", ENERGY PROCEDIA, ELSEVIER, NL, Bd. 78, 30. Dezember 2015 (2015-12-30), Seiten 1425-1430, XP029375785, ISSN: 1876-6102, DOI: 10.1016/J.EGYPRO.2015.11.165**

- H Viitanen ET AL: "Development of an improved model for mould growth: Modelling", , 1. Januar 2008 (2008-01-01), XP055474521, Gefunden im Internet: URL:https://epo.summon.serialssolutions.com/2.0.0/link/0/eLvHCXMwrV09T8MwED216sKCQCD xKXIggOEaN7WTCLGgipahLNCFyXJiGypKWrX JP-EHc 3alyA_olFMi2e85sn3PuvMB3PCRiw3tm6hdxtHf P0I WNxgXtCInMrcyVC15n4jFLH2diXkPftpcmKqmB Wi5G

9JzSlPb-KCRLaNN5xQrMv8BNbh2qEtcBgluDYY CMkg OH1n1yuAHqdnqs3ntE7xvUyF1bvIMXTLKUGht MXNCo 5Cxs4YXRZz [gefunden am 2018-05-14]
- Tuomo Ojanen ET AL: "VTT Mold Model - From visual findings to mold index", Buildings XIII Workshop, 4. Dezember 2016 (2016-12-04), XP055474548, Gefunden im Internet: URL:https://web.ornl.gov/sci/buildings/201 6/docs/presentations/workshops/workshop-5/ Workshop5_OjananViitanen.pdf [gefunden am 2018-05-14]

**Beschreibung**

Die Erfindung betrifft ein Verfahren zur Ermittlung der Wahrscheinlichkeit eines Schimmelpilz- und/oder eines Feuchteschadens in einem Gebäude, insbesondere in einem Gebäude mit Wohnräumen nach dem Oberbegriff des Anspruchs 1. Das Auftreten eines Schimmelpilzschadens ist gleichzusetzen mit Schimmelpilzbefall. Unter einem Feuchtigkeitsschaden ist ein direkter und indirekter Bauschaden zu verstehen, der an einem Bauwerk oder Gebäude durch Feuchtigkeit entsteht. Schimmelpilzbefall und Feuchteschäden können zusammen, aber auch jeweils einzeln auftreten.

Durch eine verbesserte Dämmung der Gebäudehülle, die zur Reduzierung der Energieverluste eines Gebäudes erfolgt und in der Regel eine sehr gute Abdichtung der Fenster beinhaltet, wird der Feuchtigkeitsaustausch mit der Außenwelt reduziert. Die innerhalb des Gebäudes vorhandene Feuchtigkeit muss daher durch sachgerechte Lüftungsvorgänge abtransportiert werden. Erfolgt dies nicht, kann ein Schimmelpilzbefall oder ein Feuchteschaden in den Räumen des Gebäudes als oberflächlicher Schaden und/oder in der Bausubstanz auftreten.

Eine Studie von Brasche, Heinz, Hartmann et al. am Institut für Arbeits-, Sozial- und Umweltmedizin des Universitätsklinikums Jena brachte folgendes Ergebnis: Von den 5.530 untersuchten Wohnungen wiesen 1.213 (21,9%) sichtbare Feuchteschäden (inklusive Schimmelpilz) und 513 (9,3%) Schimmelpilzschäden auf. Von 12.132 Bewohnern wurden Angaben zur Allergie- und Asthmahäufigkeit erfasst. Dabei konnte ein Zusammenhang zwischen den Schadensmerkmalen und der Häufigkeit selbstberichteter allergischer und respiratorischer Erkrankungen nachgewiesen werden.

Schimmelpilzbefall gefährdet die Gesundheit sowie das Wohlbefinden der Bewohner und schadet der Bausubstanz des Gebäudes. Nicht selten kommt es zu Diskussionen zwischen Eigentümer und Nutzern einer Wohnung über die Ursache von Schimmel- und/oder Feuchteschäden, welche einerseits durch mangelhafte Bausubstanz des Gebäudes, beispielsweise durch vorhandene Wärmebrücken, und andererseits durch unsachgemäßes Lüftungsverhalten, insbesondere zu seltenes Lüften, bei hohem Feuchteeintrag möglich ist.

Die automatisierte (Zwangs-) Lüftung bietet, mit Beachtung der Energieeffizienz, eine Möglichkeit, die überschüssige Feuchte geregelt aus dem Gebäude abzuführen. Bei der Automatisierung der Lüftung werden geregelte oder gesteuerte Lüftungssysteme eingesetzt, die abhängig von Messwerten und von Sollwertvorgaben eine Lüftung automatisch durchführen. Solche Systeme sind jedoch mit hohen Investitionen verbunden und erfordern eine regelmäßige Wartung, so dass sie eher in Gewerbeimmobilien vorzufinden sind.

Die DE 10 2008 061 087 A1 beschreibt ein Verfahren und eine Vorrichtungsanordnung zur Erfassung und Auswertung von Raumklimadaten, mit den folgenden Schritten:

- Messung einer ersten Feuchte und Bestimmung eines ersten Taupunkts an einem Neutralpunkt;
- Messung einer zweiten Feuchte und Bestimmung eines ersten Taupunkts an einem Kaltpunkt;
- Vergleich des ersten Taupunkts mit dem zweiten Taupunkt; und
- Bewertung des Raumklimas auf der Grundlage des Vergleichs der beiden Taupunkte.

Aus DE 20 2007 013 797 A1 ist ein Verfahren bekannt, das die relative Raumluftfeuchte misst und beim Überschreiten von vorgebaren Grenzwerten diese Information an ein Datenverarbeitungssystem übermittelt. Aus diesem Datenverarbeitungssystem werden der Zeitpunkt und die Zeitdauer des Überschreitens ausgelesen, und/oder das Überschreiten wird mittels einer Signalisierungseinrichtung angezeigt. Ein einfacher Zusammenhang zwischen der gemessenen relativen Raumluftfeuchte und dem Auftreten einer Schimmelpilzbildung besteht jedoch nicht. Stattdessen werden durchschnittliche Grenzwerte für die Messgrößen vorgegeben, die in vielen Fällen jedoch nicht genau genug sind, so dass dieses Verfahren in der Praxis nicht zuverlässig funktioniert.

In DE 10 2007 045 116 A1 wird ein Verfahren zur Raumklima-Datenerfassung beschrieben. Auf Basis von Temperatur- und Feuchtesensoren im Raum wird mit einer Datenverarbeitungseinheit der Verlauf der Raumklimadaten über mehrere Tage erfasst und diese Messwerte werden mit die Schimmelbildung vermeidenden Grenzwerten verglichen. Auch dieses Verfahren berücksichtigt jedoch nicht den Einfluss des Außenklimas und enthält keine Hinweise zur geeigneten Festlegung der Grenzwerte.

Bei den im Stand der Technik bekannten Verfahren zur Erkennung der Gefahr von Schimmelpilzschäden ist also nachteilig, dass diese auf komplizierten Rechenvorschriften beruhen bzw. keine sicheren Entscheidungskriterien für das Vorliegen einer Gefahr für einen Schimmelpilz- und/oder Feuchteschaden in dem Gebäude liefern können. Dies führt zu Fehldiagnosen und schränkt die praktische Nutzbarkeit der vorgeschlagenen Verfahren deutlich ein.

Die JP H11 276194 A beschreibt ein Verfahren und ein System zur Vorhersage und Diagnose des Auftretens von Schimmelpilzen in Gebäuden oder Räumen, insbesondere in Museen oder Lebensmittellagern, in denen das Auftreten von Schimmelpilzen besonders problematisch ist. Für eine Vorhersage werden mit Hilfe eines Sensors die relative Raumluftfeuchte und die Raumtemperatur für einen vorbestimmten Zeitraum in mehreren Messungen erfasst. Die erfassten Wertepaare aus relativer Raumluftfeuchte und Raumtemperatur werden anschließend einem Umweltbewertungslevel zugeordnet, die vorab festgelegt wurden, sodass einem jeden Wertepaar ein bestimmtes Umweltbewertungslevel zugewiesen werden kann. Zur Auswertung der Messergebnisse werden die Anzahl der gemessenen Umweltbewertungslevel ins Verhältnis zur Anzahl der Messungen gebracht. Zur abschließenden Bewertung werden die Verhältnisse summiert, wodurch ein Schimmelpilzerwartungswert bestimmt und eine Handlungsfolge abgeleitet werden kann.

Die US 2005/156746 A1 offenbart ein Gerät zur Überwachung von Umweltbedingungen, die für Schimmel-, Mehltau- und Pilzwachstum günstig sind, und umfasst einen Mikroprozessor mit einer Datenkarte, einen am Mikroprozessor angebrachten Temperatursensor, einen am Mikroprozessor angebrachten Sensor für die relative Luftfeuchtigkeit, ein am Mikroprozessor angebrachtes Anzeigefeld und eine am Mikroprozessor angebrachte Stromversorgung. Das Anzeigefeld kann eine einzelne Warnlampe oder ein Feld mit einer Vielzahl von Warnlampen, ein Audio-Lautsprecher oder einer Nachrichtenanzeige zur digitalen Anzeige einer oder mehrerer Umgebungsbedingungen enthalten. Zur Bewertung der Umgebungsbedingungen misst das Gerät nur die Lufttemperatur und relative Luftfeuchte in der Umgebung des Geräts und leitet mit Hilfe einer Datentabelle aus den Messwerten eine Geräteaktion (Anzeige) ab.

Aufgabe der Erfindung ist es, ein einfaches und kostengünstiges Verfahren vorzuschlagen, das eine zuverlässigere Vorhersage der Wahrscheinlichkeit eines Schimmelpilz- und/oder Feuchteschadens in einem Gebäude ermöglicht und auf mögliche Risiken eindeutiger und verlässlicher hinweist.

Die Erfindung löst die Aufgabe durch ein Verfahren und eine Vorrichtung zur Ermittlung der Wahrscheinlichkeit für einen Schimmelpilz- und/oder Feuchteschaden nach den Merkmalen der Ansprüche 1 und 13, die auf der Basis von Messungen und einer statistischen Bewertung von Umweltdaten und vorzugsweise unter Beachtung des energetischen Gebäudezustands und des Nutzungsverhaltens eine Aussage zur Wahrscheinlichkeit für einen Schimmelpilz- und/oder Feuchteschaden ermöglicht. Das Ergebnis des erfindungsgemäßen Verfahrens, d.h. die ermittelte Wahrscheinlichkeit, kann dem Nutzer einer Nutzeinheit (Wohnung, Gewerberäume) und/oder an den Gebäudeeigentümer / Gebäudebetreiber (Hausverwalter) als Hinweis zur Anzeige gebracht werden und ermöglicht so ein frühzeitiges Eingreifen und dadurch die Vermeidung von Gebäude- und / oder Gesundheitsschäden.

Ein wesentlicher Vorteil der Erfindung im Vergleich zum Stand der Technik liegt darin, zusätzliche Bedingungen bei den Messungen zu verwenden, dabei insbesondere auch eine Berücksichtigung der energetischen Charakteristika des Gebäudes, des aktuellen Nutzungsverhaltens und von aktuell vorliegenden Außenklimadaten, so dass Fehldiagnosen bei der Ermittlung des Risikos nahezu vollständig eliminiert werden können.

So ermöglicht das erfindungsgemäße Verfahren eine deutlich zuverlässigere Aussage zur Wahrscheinlichkeit für einen Schimmelpilz- und/oder Feuchteschaden, vorzugsweise in einem Wohn- oder Gewerbegebäude, als dies die im Stand der Technik bekannten Verfahren ermöglichen. Die erfindungsgemäße Vorrichtung ist kostengünstig im Rahmen eines AMR-Systems (Automatic Meter Reading-System) realisierbar und liefert die erforderlichen Informationen, um die Nutzer der Räume und/oder die Eigentümer bzw. die Betreiber des Gebäudes (Hausverwaltung) über das Risiko von Feuchte- und/oder Schimmelpilzschäden einfach und zuverlässig zu informieren. Gesundheits- und/oder Gebäudeschäden können vermieden beziehungsweise mögliche Gefahren können frühzeitig entdeckt werden.

Das erfindungsgemäße Verfahren schlägt vor, Raumklimadaten mittels Sensoren und Außenklimadaten mittels Sensoren oder Online-Wetterdaten, d.h. durch Verwendung und Abruf von Online-Wetterdaten, zu erfassen und daraus die das Raumklima charakterisierende Kennwerte abzuleiten. Durch das Bewerten der Kennwerte wird die Wahrscheinlichkeit für das Auftreten eines Schimmelpilz- und/oder Feuchteschadens ermittelt, wobei die Bewertung der Kennwerte anhand mindestens einer Wahrscheinlichkeitstabelle erfolgt, welche einen Wahrscheinlichkeitswert für Schimmelpilz- und/oder Feuchteschäden in Abhängigkeit von mindestens zwei Kennwerten, insbesondere empirischen Erfahrungswerten, vorgibt.

Das Ableiten (bspw. in Form einer rechnerischen Bestimmung aus den Sensordaten oder als Auswahl von Sensordaten) von für das erfindungsgemäße Verfahren notwendigen und/oder die Genauigkeit des erfindungsgemäß vorgeschlagenen Verfahrens verbessernden Kennwerten erfolgt erfindungsgemäß vorzugsweise direkt durch die zentrale Recheneinheit unter Verwendung der erfassten Raum- und Außenklimadaten, insbesondere also der von den Sensoren gemessenen und ausgesendeten und in die zentrale Recheneinheit übertragenen Sensordaten (mit den darin enthaltenen Messwerten) und/oder aus den Online-Wetterdaten.

Als Kennwert kommt insbesondere eine relative und/oder absolute Innenraumluftfeuchte, eine sich als Differenz von relativer oder absoluter Innenraumluftfeuchte zu relativer oder absoluter Außenluftfeuchte berechnende Feuchtedifferenz, eine Innenraumlufttemperatur, eine Außenlufttemperatur, ein Innenwandoberflächentemperatur, eine sich als Differenz zwischen der Innenraumlufttemperatur und der Innenwandoberflächentemperatur und/oder ein aus verschiedenen Temperaturwerten ermittelter Temperaturfaktor in Frage.

Die Bewertung der von Sensoren erfassten Messwerte (Sensorwerte als Raumklimadaten und ggf. Außenklimadaten) und/oder der erfassten Online-Wetterdaten als Außenklimadaten und der rechnerisch abgeleiteten, das Raumklima charakterisierenden Kennwerte (nachfolgend auch kurz als "abgeleitete Kennwerte" bezeichnet) zur Ermittlung der Wahrscheinlichkeit für Schimmelpilz- und/oder Feuchteschäden erfolgt mittels Auswertung von mindestens einer zum Zugriff durch die zentrale Recheneinheit hinterlegten Wahrscheinlichkeitstabelle.

In einer später noch detaillierter beschriebenen Weise kann eine Wahrscheinlichkeitstabelle die Wahrscheinlichkeit von Schimmelpilz- und/oder Feuchteschäden anhand empirischer Erfahrungswerte beschreiben. Eine solche Wahrscheinlichkeitstabelle kann erfindungsgemäß einmal erstellt und hinterlegt werden. Es ist auch möglich, eine solche Tabelle aufgrund neu erhobener Daten regelmäßig zu aktualisieren. Für die Durchführung des erfindungsgemäß vorgeschlagenen Verfahrens ist wesentlich, dass eine solche Tabelle im System hinterlegt ist, damit eine zur Durchführung des Verfahrens eingerichtete zentrale Recheneinheit auf die Wahrscheinlichkeitstabelle zugreifen kann.

Erfindungsgemäß erfolgt die Beschreibung der Wahrscheinlichkeit für Schimmelpilz- und/oder Feuchteschäden in Abhängigkeit von mindestens zwei Kennwerten. Es hat sich herausgestellt, dass durch eine korrelierte Berücksichtigung von zwei Kennwerten in einer Wahrscheinlichkeitstabelle sicherere Aussagen für das Auftreten von Schimmelpilz- und Feuchteschäden getroffen werden können, wenn die Kenndaten sowohl Raumklimadaten als auch Außenklimadaten beinhalten.

Eine in Abhängigkeit von zwei Kennwerten geführte Wahrscheinlichkeitstabelle kann erfindungsgemäß als zweidimensionales Kennfeld strukturiert sein, das für jede Kombination von Wertebereichen der jeweils beiden Kennwerte einen Wahrscheinlichkeitswert angibt.

Optional kann das Ergebnis, d.h. die ermittelte Wahrscheinlichkeit für einen Schimmelpilz- und/oder Feuchteschaden, im Rahmen des Verfahrens an eine Anzeigeeinrichtung ausgegeben werden. Dies kann bspw. ein in dem Gebäude oder Gebäudeteil angeordnetes Display sein, das dem Nutzer des Gebäudes oder Gebäudeteils (bspw. Wohnung, Raum) das Ergebnis anzeigt. Eine Anzeige ist auch durch Übermittelung des Datenwerts des Ergebnisses, bspw. an eine Computereinrichtung oder ein Online verfügbares Nutzerportal, möglich. Auch eine akustische Anzeige ist alternativ oder ergänzend möglich. Eine insbesondere für den Nutzer eines Gebäudes ansprechende graphische Ausgabe kann durch Verwendung eines Ampelsystems erfolgen, das gleichzeitig eine Bewertung des Risikos vornimmt, um ggf. einen Handlungsbedarf (Lüften, Heizen oder dgl.) anzeigt. Die Farbe "Rot" kann entsprechend einen akuten Handlungsbedarf, die Farbe "Gelb" die Notwendigkeit für eine aufmerksame Beobachtung des Risikos und die Farbe "Grün" einen Zustand ohne nennenswertes Schimmelpilz- oder Feuchteschadensrisiko anzeigen. Nutzer des Gebäudes können ein Bewohner, ein Eigentürmer und/oder eine Hausverwaltung sein.

Erfindungsgemäß ist mindestens eine der Wahrscheinlichkeitstabellen in Abhängigkeit der Kennwerte relative oder absolute Innenraumluftfeuchte und einer relativen oder absoluten Feuchtedifferenz aus Innenraumluftfeuchte und Außenluftfeuchte ausgeführt, vorzugsweise abhängig von der relativen Innenraumluftfeuchte und der Feuchtedifferenz der absoluten Innenraumluftfeuchte zu der absoluten Außenluftfeuchte. Eine solche Wahrscheinlichkeitstabelle bewertet den für das Entstehen von Schimmelpilz- und/oder Feuchteschäden wichtigen Einfluss der Innen- und Außenfeuchte im Verhältnis zueinander. Eine weitere wichtige Wahrscheinlichkeitstabelle, die zusammen mit der zuvor beschriebenen Wahrscheinlichkeitstabelle eingesetzt wird, bewertet die Wahrscheinlichkeit für das Auftreten von Schimmelpilz- und/oder Feuchteschäden in Abhängigkeit eines Nutzerverhaltens, das sich in einer Variation der Raumtemperatur in einem üblichen Raumtemperaturbereich entsprechend persönlicher Vorlieben und in der relativen Innenraumluftfeuchte abhängig insbesondere von der Personenzahl im Raum und/oder der Nutzung des Raums (Wohnraum, Bad, Küche) wiederspiegelt.

Im Rahmen einer einfach durchführbaren empirischen Ermittlung kann die mindestens eine der Wahrscheinlichkeitstabellen als zweidimensionales Prävalenzkennfeld geführt sein. Die Prävalenz lässt sich dadurch ermitteln, dass in Gebäudeeinheiten das Auftreten von Schimmelpilz und/oder Feuchteschäden untersucht wird. Als Prävalenz wird dann die Anzahl der ermittelten Schäden ins Verhältnis zur Gesamtzahl der untersuchten Gebäudeeinheiten gesetzt. Vorzugsweise wird die Prävalenz für jede Kombination von Wertebereichen der Kennwerte separat ermittelt. Dies kann durch Aufnahme der folgenden Daten in einer Gebäudeeinheit erfolgen: Eintreten eines Schadensfalls (ja/nein), Wert des ersten Kennwerts, Wert des zweiten Kennwerts. Für die Kennwerte werden jeweils Wertbereiche definiert, und die erhobenen Ereignisse (Eintreten des Schadensfalls ja/nein) werden in die jeweiligen Wertebereiche einsortiert. Hierdurch lässt sich die Prävalenz eines Ereignisses (Eintreten oder Nicht-Eintreten des Schadensfalls ermitteln, indem die Anzahl der Ereignisse ins Verhältnis nur Gesamtzahl der Stichproben (jeweils bezogen auf den Wertbereich des ersten Kennwerts und des zweiten Kennwerts) ermittelt wird. Hierdurch wird ein zweidimensionales Prävalenzkennfeld gebildet. Die Erzeugung eines zweidimensionalen Kennfelds macht insbesondere dann Sinn, wenn die Wahrscheinlichkeit für die Auftreten eines Schadens (Feuchte und/oder Schimmelpilz) bezogen auf eine Kombination der Kennwerte kein klar lineares Verhalten aufweist.

In diesem Zusammenhang ergibt sich eine erfindungsgemäß bevorzugte Aufteilung des für die Wahrscheinlichkeitstabelle grundsätzlich zu berücksichtigenden Wertebereichs mindestens eines der beiden Kennwerte, vorzugsweise aber beider der der Wahrscheinlichkeitsverteilung zugrundeliegenden Kennwerte, in Tertile oder Quartile. Eine Einteilung in Tertile der Wahrscheinlichkeitsverteilung, bezogen auf einen Kennwert, bedeutet, den Wertebereich der Kennwerts in drei Teile einzuteilen, wobei in den drei Teilen jeweils ein Drittel der Werte der Wahrscheinlichkeitsverteilung liegt. Für Quartile erfolgt die Aufteilung entsprechend in vier Teile.

Die Aufteilung in Tertile oder Quartile ist erfindungsgemäß besonders bevorzugt, wobei der Grundgedanke dieses erfindungsgemäßen Aspekts grundsätzlich auch eine Aufteilung in andere Quantile mit einschließt.

Durch eine solche Aufteilung ergibt sich, bezogen auf zwei in Tertile aufgeteilte Kennwert-Wertebereiche, ein 3-x-3-Kennfeld mit insgesamt 9 Einträgen. Es hat sich gezeigt, dass hierdurch in etwa eine Gleichverteilung der Anzahl der ausgewerteten Ereignisse ergibt, die zu einer vergleichsweise zuverlässigen Wahrscheinlichkeitsverteilung führt. Entsprechend ergibt sich bei einer Aufteilung in Quartile ein 4-x-4-Kennfeld, wobei eine gemischte Aufteilung der beiden Kennwerte in Tertile und Quartile erfindungsgemäß auch möglich ist und ein 4-x-3-Kennfeld ergibt.

Gemäß einem weiteren Aspekt der Erfindung kann bei der Ermittlung der Wahrscheinlichkeit für einen Schimmelpilz- und/oder Feuchteschaden zusätzlich auch eine Größe berücksichtigt werden, welche die Wärmedämmung des Gebäudes in Betracht zieht. Auch hierfür käme grundsätzlich eine Wahrscheinlichkeitstabelle in Frage, die ggf. einen Kennwert für die Wärmedämmung des Gebäudes eindimensional in Relation zu dem Auftreten eines Schimmelpilz- oder Feuchteschadens setzt. Ggf. kann die Kennzahl auch mit weiteren Kennwerten in Beziehung gesetzt werden, um auch hier eine zweidimensionale Wahrscheinlichkeitstabelle zu erzeugen. Ein relevanter Kennwert zur Kombination könnte die Außenlufttemperatur oder eine Differenz der Innenraumlufttemperatur und der Außenlufttemperatur sein, weil das Risiko für einen Schimmelpilz- und/oder Feuchteschaden in der Regel von einer Temperaturdifferenz in Zusammenhang mit einer Gebäudewärmedämmung meist bei einem Temperaturunterschied im Inneren eines Gebäudes zu der Außenlufttemperatur auftritt.

Ein geeigneter Kennwert für die Wärmedämmung des Gebäudes ist gemäß einer bevorzugten Ausgestaltung des erfindungsgemäß vorgeschlagenen Verfahrens eine Wärmeschutzklasse WSK, die den energetischen Zustand bzw. das Wärmeschutzniveau des Gebäudes abbildet. Grundsätzlich kann hierfür eine Bewertung zugrunde gelegt werden, wie sie bspw. bei der Ermittlung eines Energieausweises für das Gebäude verwendet wird. In eine solche Bewertung gehen die baulichen Merkmale des Gebäudes (Baumaterial, Dämmung, Fester, Bauschäden etc.) ein. Eine Berücksichtigung dieser Merkmale ist, sofern eine Bewertung des Gebäudes nicht bereits vorliegt, aufwendig, weil in der Regel eine Begehung des Gebäudes durch Experten und die Erstellung eines entsprechenden Gutachtens notwendig sind. Eine geeignete Größe in diesem Sinne ist der u-Wert der Gebäudehülle, der ein Maß für den "Wärmedurchgang" durch einen festen Körper (etwa eine Wand) von einem "Fluid" (ein Gas oder eine Flüssigkeit) in ein zweites Fluid aufgrund eines Temperaturunterschiedes zwischen den Fluiden ist. Im Fall einer ebenen Wand gibt er den "Wärmestrom" (Wärmeenergie pro Zeit) je Fläche der Wand und je Kelvin Temperaturunterschied der beiden Fluide an. Der Wärmedurchgangskoeffizient (u-Wert) ist ein spezifischer Kennwert eines Bauteils. Er wird im Wesentlichen durch die Wärmeleitfähigkeit und Dicke der verwendeten Materialien bestimmt, aber auch durch die Wärmestrahlung und Konvektion an den Oberflächen.

Häufig ist aus einer Erfassung der Heizkostenverteilung der Heizenergieverbrauch bekannt und durch eine Energieverbrauchskennzahl $EV_h$ für die Raumheizung charakterisiert. Diese Energieverbrauchszahl kann in bekannter Weise aus den Daten der Jahresheizkostenabrechnung berechnet werden. Die Energieverbrauchskennzahl $EV_h$ stellt daher eine erfindungsgemäß besonders geeignete Kennzahl für die Wärmedämmung des Gebäudes dar. Sie gibt den Energieverbrauch in kWh pro Quadratmeter und Jahr, d.h. als kWh/(m$^2$ anno), an und eignet sich damit direkt als Kenngröße für beheizte Gebäude. Eine solche Kenngröße liegt bspw. einem Dienstleister für die Energieverbrauchsermittlung oder einer Hausverwaltung vor und kann im Rahmen des Verfahrens unmittelbar übernommen werden. In die Bewertung der Wärmeschutzklasse aus dem Energieverbrauch, d.h. der Energieverbrauchskennzahl, kann auch der Energieträger (bspw. Fernwärme, Öl, Gas, Strom) mit eingehen. Dies kann bspw. bei der später noch genauer beschriebenen Bewertung der Energieverbrauchskennzahl erfolgen.

Gemäß einer besonders bevorzugten Ausführungsform wird allerdings vorgeschlagen, einen Kennwert für die Wärmedämmung des Gebäudes aus erfassten Sensordaten zu ermitteln, weil dieses Verfahren ohne die Eingabe von außerhalb des Verfahrens ermittelten Kennwerten auskommt. Ggf. können die von außen ermittelten Kennwerte zusätzlich oder als Plausibilisierung und/oder Korrektur verwendet werden.

Ein solcher durch erfasste Sensordaten berechenbarer Kennwert ist der Temperaturfaktor $f_{RSi}$, der in später noch genauer offenbarter Weise aus den Sensorwerten Innenraumlufttemperatur $\vartheta_I$ Außentemperatur $\vartheta_A$, Wandoberflächentemperatur $\vartheta_{sI}$ und/oder Differenz zwischen Innenraumlufttemperatur und Innenwandoberflächentemperatur $\Delta\vartheta_{sI-I}$ ermittelt werden kann. Ein solcher Temperaturfaktor $f_{RSi}$ ist erfindungsgemäß besonders geeignet, um eine Bewertung für die Wärmedämmung des Gebäudes auf der Grundlage von bei der Durchführung des Verfahrens erfassbaren Sensordaten zu bestimmen. Dies hat den Vorteil, dass auch temporäre Einflüsse, wie bspw. eine ungewollt lange Fensteröffnung im Winter, der Ausfall oder die Nichtbenutzung eines (bspw. dauerhaft abgedrehten) Heizkörpers oder dgl., bei der Bewertung der Wahrscheinlichkeit für einen Schimmelpilz- oder Feuchteschaden berücksichtigt werden können.

Gemäß einer besonders bevorzugten Ausführungsform der Erfindung werden zur Ermittlung der Wahrscheinlichkeit für einen Schimmelpilz- und/oder Feuchteschaden in einem Gebäude mehrere Kennwerte und/oder aus einer Wahrscheinlichkeitstabelle entnommene Wahrscheinlichkeitswerte verwendet, wobei die mehreren Kennwerte oder Wahrscheinlichkeitswerte in einer bevorzugten Ausführung des vorgeschlagenen Verfahrens mittels einer Fuzzy-Logik bewertet und zu einer Gesamtwahrscheinlichkeit zusammengefasst werden. Der Vorteil der Fuzzy-Logik besteht darin, dass verschiedene Einflüsse für die Entstehung eines Schimmelpilz- oder Feuchteschadens durch eine einfache Logikfunktion zu einer Gesamtwahrscheinlichkeit zusammengefasst werden können, ohne dass funktional-analytische Zusammenhänge bestehen oder durch einen Algorithmus beschrieben werden müssen. Hierdurch können auch verschiedenste Einflüsse durch Regeln bewertet und zu einem Gesamtergebnis zusammengefasst werden, wobei die einzelnen Einflüsse jeweils ein bestimmtes Gewicht erhalten. Dies eignet sich besonders auch für die komplexe Bewertung von verschiedenen Einflussfaktoren in einem auch in der Praxis einfach handhabbaren Rahmen, insbesondere ohne den Einsatz apparativ aufwendiger Messtechnik oder extensiver Rechentechnik für aufwendige Rechenoperationen.

Gemäß einem bevorzugten Aspekt der Fuzzy-Logik in dem konkreten Anwendungsfall wird vorgeschlagen, dass bei der Anwendung der Fuzzy-Logik jedem zu bewertenden Kennwert oder Wahrscheinlichkeitswert drei Zugehörigkeitsgrade zugewiesen werden, die einen hohen, mittleren und niedrigen Einfluss auf den Eintritt eines Schadensereignisses quantifizieren und aus vorgegebenen Zugehörigkeitsfunktionen für einen hohen, mittleren und niedrigen Einfluss abgelesen werden. Es sind also erfindungsgemäß drei Zugehörigkeitsfunktionen vorgeben, die auf den Wertebereich des jeweiligen Kennwerts bzw. Wahrscheinlichkeitswerts angewendet werden und als Funktionswert einen Zugehörigkeitsgrad $\mu_{niedrig}$, $\mu_{mittel}$ und $\mu_{hoch}$ liefern. Die Zugehörigkeitsfunktionen sind im Vorfeld vor Anwendung des Verfahrens definiert und können derart festgelegt werden, dass eine hohe Zuverlässigkeit bei der Ermittlung der Wahrscheinlichkeit des Eintritts eines Schadenfalls erreicht werden kann. Beispiele für besonders geeignete Zugehörigkeitsfunktionen sind im Rahmen der detailliert beschriebenen Ausführungsbeispiele offenbart, die durch den Fachmann optimiert werden können, ohne den erfindungsgemäßen Grundgedanken zu verlassen. Dazu gehört, ggf. mehr als drei Zugehörigkeitsfunktionen zu verwenden, um eine genauere Differenzierung zu erreichen. Mit den gemäß einer konkreten Ausführung vorgeschlagenen genau drei Zugehörigkeitsfunktionen ergibt sich aber eine für den Anwendungsweck ausreichende und besonders gut handhabbare logische Struktur, die in einer zentralen Recheneinheit einfach umgesetzt werden kann.

Die Anwendung der Fuzzy-Logik bietet mit der vorbeschriebenen logischen Struktur den erheblichen Vorteil, dass Zwischenergebnisse der Fuzzy-Logik einer intuitiven Bewertung zugänglich sind und so eine Änderung des Verfahrens zur Risikoabschätzung auf intuitive Weise möglich ist. Daher wird eine Fuzzy-Logik zur Ermittlung der Wahrscheinlichkeit für das Risiko eines Schimmelpilz- und/oder Feuchteschadens erfindungsgemäß bevorzugt.

Je nach dem Wert können bei der Anwendung der Fuzzy-Logik in einer Fuzzyfizierung bestimmten vordefinierten Zugehörigkeitsfunktionen gewisse Werte zugewiesen werden, die den Grad des Risikos eines Schimmelpilz- und/oder Feuchteschadens charakterisieren. Entsprechend einer Regelbasis für eine Fuzzy-Inferenz werden dann in einer Ausführungsform aus den Zughörigkeitsfunktionswerten der Prävalenz der Feuchteschäden, der Prävalenz der Schimmelpilzschäden und/oder der Wärmeschutzklasse in der Fuzzy-Inferenz Zugehörigkeitswerte für die Wahrscheinlichkeit des Risiko eines Schimmelpilz- und/oder Feuchteschadens ermittelt, der durch eine Defuzzyfizierung einen Wert für die Wahrscheinlichkeit des Risikos eines Schimmel und/oder Feuchteschadens liefert. Die Verfahren für eine Defuzzyfizierung sind grundsätzlich bekannt und müssen daher im Rahmen dieses Textes nicht genauer beschrieben werden. Bspw. kann eine Schwerpunktmethode zur Bewertung der Werte der jeweiligen Zugehörigkeitsfunktionen verwendet werden.

Bevorzugt kann die Wahrscheinlichkeit für einen Schimmelpilz- und/oder Feuchteschaden durch Bewertung der Kennwerte jeweils einmal im Bewertungszeitraum durchgeführt wird, wobei der Bewertungszeitraum gemäß einer möglichen Realisierung eine Stunde, vorzugweise zwischen 0,5 und 3 Stunden, betragen kann. Hierdurch wird eine ausreichende zeitliche Auflösung erreicht. Ggf. sind auch Bewertungszeiträume größer als eine Stunde im Rahmen des vorgeschlagenen Verfahrens möglich.

Es kann vorgesehen sein, dass das Verfahren zur Ermittlung der Wahrscheinlichkeit für einen Schimmelpilz- und/oder Feuchteschaden durch Bewertung der Kennwerte in aufeinander folgenden Bewertungszeiträumen mehrfach durchgeführt worden sein muss, bevor das Ergebnis des Verfahrens ausgebeben wird. Hierfür kann eine Mindestanzahl vorgegeben werden. Hintergrund dieser Ausgestaltung ist es, dass eine Momentaufnahme einer Bewertung unter Umständen nicht aussagekräftig ist und durch zufällige Ereignisse verfälscht sein kann. Die Ausgabe einer Wahrscheinlichkeit kann bspw. dann erfolgen, wenn sie nach vorgegeben Regeln aus dem Anwendungsverlauf wahrscheinlich ist.

Erfindungsgemäß können mit entsprechenden Sensoreinreichungen ausgestattete Heizkostenverteiler, Rauchwarnmelder oder internetfähige Sensorgeräte zur Erfassung von Sensordaten verwendet werden. So lässt sich das System einfach in vorhandene Verbrauchserfassungssysteme, insbesondere mit einem Funknetz zur Datenkommunikation, beispielsweise einem AMR-System, einbinden.

Ferner kann vorgesehen sein, dass die Sensordaten durch das Sensorgerät (im Sinne eines mit einer entsprechenden Sensoreinrichtung ausgestatteten Gerätes) vor der Übertragung an eine zur Durchführung des Verfahrens eingerichtete zentrale Recheneinheit oder auf dem Übertragungsweg an die zentrale Recheneinheit in einer Datensammeleinrichtung bearbeitet werden, insbesondere um die Datenlast des Systems bei der Übertragung zu verringern. Dazu kann insbesondere eine Mittelwertbildung des erfassten (gemessenen) Sensorwertes über den Bewertungszeitraum erfolgen. Dies dient auch der Glättung zufälliger Ausreißer der Sensorwerte und führt zu einer im Mittel zuverlässigeren Messung.

Die Erfindung beschreibt auch eine Vorrichtung zur Ermittlung der Wahrscheinlichkeit für einen Schimmelpilz- und/oder Feuchteschaden in einem Gebäude mit Sensorgeräten zur Erfassung von Raumklimadaten, Kommunikationseinrichtungen zur drahtlosen Datenübertragung, mindestens einer Datensammeleinrichtung zum Empfangen von Daten der Sensorgeräte und/oder von Online-Wetterdaten und Aussenden der Daten an eine zentrale Recheneinheit. Die zentrale Recheneinheit, die Sensorgeräte und die mindestens eine Datensammeleinrichtung weisen jeweils eine Prozessoreinheit auf, die zur Durchführung des zuvor beschriebenen Verfahrens eingerichtet sind. Vorzugsweise übernehmen die Sensorgeräte und die Datensammeleinrichtungen die Aufgaben der Datenübertragung der Sensordaten und ggf. Datenvorverarbeitung der Sensordaten, insbesondere im Hinblick auf eine Mittelung der durch die Sensorgeräte gemessenen Daten. Das Ableiten der Kennwerte aus den Sensordaten und die Bewertung der Kennwerte und/oder Wahrscheinlichkeitswerte wird erfindungsgemäß bevorzugt in der zentralen Recheneinheit durchgeführt, die bspw. ein lokaler Masterdatensammler oder ein entfernter zentraler Rechner, bspw. in einem IT-System einer Hausverwaltung oder eines Energie-Abrechnungsdienstleisters, sein kann.

Die Prozessoreinheiten der beteiligten Geräte sind jeweils zur Durchführung von Verfahrensschritten eingerichtet, die im Zusammenwirken eine Ausführungsform des beschriebenen Verfahrens ausführen.

Das erfindungsgemäße Verfahren wird nachstehend anhand der Zeichnungen näher erläutert.

Fig.1   zeigt eine erfindungsgemäße Vorrichtung zur Durchführung des erfindungsgemäß vorgeschlagenen Verfahren gemäß einer bevorzugten Ausführungsform mit einer Datenübertragung von Raumklimadaten und Außenklimadaten an eine entfernte zentrale Recheneinheit;

Fig.2   zeigt beispielhaft die Tertile einer Häufigkeitsverteilung für das Auftreten von Feuchteschäden;

Fig.3   zeigt eine logische Zusammenstellung der Ein- und Ausgangsgrößen für die Berechnung der Wahrscheinlichkeit von Feuchteschäden für ein Bewertungsintervall gemäß einer ersten Ausführungsvariante;

Fig.4   zeigt eine logische Zusammenstellung der Ein- und Ausgangsgrößen für die Berechnung der Wahrscheinlichkeit von Schimmelpilzschäden für ein Bewertungsintervall gemäß einer ersten Ausführungsvariante;

Fig.5   zeigt beispielhaft ein Kennfeld zur Ermittlung der Prävalenz für Feuchteschäden (PFS);

Fig.6   zeigt beispielhaft ein Kennfeld zur Ermittlung der Prävalenz für Schimmelpilzschäden (PSPS);

Fig.7   zeigt eine mögliche Zugehörigkeitsfunktionen $\mu(x)$ für die Fuzzyfizierung der Prävalenz (PSPS) und (PFS);

Fig.8   zeigt beispielhaft ein Kennfeld zur Ermittlung der Nutzungsrisikoklasse (NRK);

Fig.9   zeigt eine mögliche Zugehörigkeitsfunktionen $\mu(x)$ für die Fuzzyfizierung der Nutzungsrisikoklasse (NRK);

Fig.10  zeigt eine mögliche Tabelle zur Veranschaulichung der Herleitung der Zugehörigkeitsfunktionen für die Wärmeschutzklasse (WSK);

Fig.11  zeigt eine mögliche Zugehörigkeitsfunktionen $\mu(x)$ für die Fuzzyfizierung der Wärmeschutzklasse (WSK);

Fig.12  zeigt eine tabellarische Übersicht der Regelbasis der Fuzzy-Logik zur Ermittlung des Risikos für Schimmelpilzschäden gemäß einer vorteilhaften Ausführungsform;

Fig.13  zeigt eine tabellarische Übersicht der Regelbasis der Fuzzy-Logik zur Ermittlung des Risikos für Feuchteschäden Schimmelpilz- oder Feuchteschäden gemäß einer vorteilhaften Ausführungsform;

Fig.14  zeigt eine mögliche Zugehörigkeitsfunktion für das Risiko von Schimmelpilzschäden;

Fig.15  zeigt eine mögliche Zugehörigkeitsfunktion für das Risiko von Feuchteschäden mit Markierung der unscharfen Ergebnismenge;

Fig.16  zeigt eine mögliche Tabelle der Risikoklassen für Schimmelpilz- / Feuchteschäden mit den Grenzwerten und der Ergebnisausgabe;

Fig.17  zeigt eine logische Zusammenstellung der Ein- und Ausgangsgrößen für die Berechnung der Wahrscheinlichkeit von Feuchteschäden für ein Bewertungsintervall gemäß einer weiteren Ausführungsform mit der Eingangsgröße Temperaturfaktor $f_{RSI}$;

Fig.18  zeigt eine mögliche Zugehörigkeitsfunktionen $\mu(x)$ für die Fuzzyfizierung des Temperaturfaktors $f_{RSI}$ als weitere Ausführungsvariante;

Fig 19  zeigt schematisch eine erfindungsgemäße Vorrichtung mit den Sensordaten und der Ausgabe als Ampelanzeige gemäß einer bevorzugten Ausführungsform.

Die messtechnische Erfassung von Raumklima- und/oder Außenklimadaten mit Sensoren ist im Stand der Technik bekannt. Zur Messung der Raumklima- und Außenklimaparameter werden vorzugsweise Sensoren verwendet, die über mindesten einen Funksender verfügen und die ihre Daten (Sensorwerte im Sinne von Messwerten, Sensoridentifikationsdaten, usw.) entweder spontan, also ereignisgesteuert, oder zyklisch, also zeitgesteuert, oder - sofern die Sensoren mit bidirektionalem Funkmodulen ausgestattet sind - nach Aufforderung durch eine Datensammeleinrichtung aussenden. Temperatursensoren und Feuchtesensoren, die als funkende Sensoren ausgebildet sind und ihre Messwerte ggf. mit weiteren Dateninformationen als Sensordaten aussenden, sind beispielsweise als Wireless M-Bus / OMS Luftfeuchte- und Temperatursensor am Markt verfügbar.

Zur Übertragung der Sensordaten von einem lokalen Sensor zu einer zentralen Recheneinheit (im Sinne einer zentralen Datensammeleinrichtung), in der das erfindungsgemäße Verfahren ausgeführt wird, kann - insbesondere zur Überbrückung von langen Funkstrecken - ein Funknetzwerk mit mehreren (dezentralen) Datensammeleinrichtungen mit Weiterleitungsfunktionalität und/oder mit Repeaterfunktionalität bezüglich der Funktelegramme der Sensoren und/oder ein als Meshed-Network ausgebildetes Funknetzwerk verwendet werden, bei dem die Sensoren direkt miteinander kommunizieren können.

Diese Aspekte zur Realisierung der Erfindung sind dem Fachmann bekannt und müssen an dieser Stelle daher nicht weiter beschrieben werden.

In der bevorzugten Ausführung des erfindungsgemäßen Verfahrens werden zur Erfassung der Raumklimadaten, wie Raumtemperatur und/oder relative Luftfeuchtigkeit, Sensoren verwendet, die ihre Messwerte als Sensordaten über Funk an einen oder mehrere im Gebäude installierte, vorzugsweise batteriebetriebene, Datensammeleinrichtungen übertragen. In einer Ausführungsform wird das erfindungsgemäße Verfahren in einer lokal im Gebäude installierten zentralen Recheneinheit, einem sogenannten Masterdatensammler, ausgeführt. Zu diesem Masterdatensammler (im Sinne einer lokalen zentralen Datensammeleinrichtung) übertragen alle im Gebäude installierten (dezentralen) Datensammeleinrichtungen unmittelbar und/oder über einen oder mehrere Repeater (insbesondere die dezentralen Datensammeleinrichtungen) die von ihnen empfangenen Sensordaten.

Das erfindungsgemäße Verfahren ist allerdings nicht auf ein lokales System beschränkt, d.h. ein System, bei dem alle Systemkomponenten innerhalb eines Gebäudes oder eines Gebäudekomplex installiert sind. Einige oder alle im Gebäude installierte Datensammeleinrichtungen können über eine Vorrichtung zur Datenfernübertragung, bspw. einen Anschluss für ein drahtgebundenes Bussystem und/oder eine Netzwerkschnittstelle bspw. für Ethernet oder WLAN und/oder über eine Powerline-Schnittstelle und/oder besonders vorteilhaft über ein Modem zur Datenfernübertragung über Mobilfunk verfügen und dadurch ihre Daten an einen Leitstand, ein Gebäudeautomatisierungssystem oder an ein IT-System einer Hausverwaltung oder ein IT-System eines Servicedienstleisters oder in eine im Internet verfügbare Daten-Cloud vorzugsweise mit temporärer (Zwischen-) Speicherfunktion als zentrale Recheneinheit (entfernte zentrale Datensammeleinrichtung) übertragen.

Sind die Sensoren für das "Internet of Things" (IoT) geeignet, so können die Sensoren ihre Sensordaten auch indirekt an die zentrale Reineinheit übertragen, beispielsweise über eine Mobilfunkdatenübertragung in eine Daten-Cloud oder zu einem IT-System, in welchem die zentrale Recheneinheit erreichbar ist.

Die zentrale Recheneinheit, welche zur Durchführung des erfindungsgemäßen Verfahrens geeignet und eingerichtet ist, ist in dieser Ausgestaltung der Vorrichtung zur Ermittlung der Wahrscheinlichkeit für einen Schimmelpilz- und/oder Feuchteschaden in einem Gebäude also nicht lokal in dem Gebäude, sondern an einem davon entfernten Ort angeordnet, insbesondere innerhalb des IT-Systems der Hausverwaltung des Gebäudes oder besonders bevorzugt innerhalb des IT-Systems eines Servicedienstleisters für die Heizkostenabrechnung. Der Ort (lokal oder entfernt) der zentralen Recheneinheit ist für die eigentliche Durchführung des Verfahrens jedoch nicht von entscheidender Bedeutung.

Die Erfassung der Messwerte durch die Sensoren erfolgt üblicherweise mit einem festgelegten Messzyklus, in Abständen (Abtastrate) von wenigen Minuten und somit mit häufigen Messwiederholungen. Die Messwerte werden, sofern der Sensor dies ermöglicht, mit einem Zeitstempel (Zeitpunkt der Messung) versehen, um sie zeitlich (chronologisch) zuordnen zu können. Durch diesen Zeitstempel ist eine "zeitgleiche" Erfassung aller Messwerte im Gebäude möglich. Kann ein Sensor seine Sensordaten nicht mit einem Zeitstempel versehen, da der Sensor nicht über eine Zeitfunktion (beispielsweise eine sogenannte Real-Time-Clock) verfügt, so kann alternativ der Empfangszeitpunkt in einer Datensammeleinrichtung vor der Weiterleitung an die zentrale Recheneinheit oder der Empfangszeitpunkt in der zentralen Recheneinheit als Zeitstempel den Messwerten hinzugefügt werden. Die hierbei entstehende geringe zeitliche Abweichung zwischen dem tatsächlichen Zeitpunkt der Messung in den Sensoren und dem Aussenden / Empfangen des Funktelegramms ist im erfindungsgemäßen Verfahren tolerier- und vernachlässigbar. Entsprechendes gilt für über Online-Wetterdaten erfasste Außenklimadaten.

Die Datenübertragung der Messwerte von dem Sensor an die Datensammeleinrichtung und/oder die zentrale Recheneinheit erfolgt, vorzugsweise mittels eines Funktelegramms, in vorgebbaren Zeitabständen (zyklisch), unmittelbar nach der Messung in dem Sensor oder anderweitig ereignisgesteuert oder, sofern die Sensoren mit bidirektionalem Funkmodulen ausgestattet sind, nach Aufforderung durch einen Empfänger, insbesondere eine Datensammeleinrichtung, zu der in diesem Sinne auch die zentrale Recheneinheit als zentrale Datensammeleinrichtung zählt. Die Häufigkeit der Messungen und/oder der Übertragung der Sensorwerte kann dynamisch an die Umweltsituation angepasst werden. Beispielsweise kann die Anzahl der Messwiederholungen bei den Sensoren abhängig von definierten Schwellwerten und/oder Ereignissen automatisch erhöht oder erniedrigt werden.

Der Abruf von Online-Wetterdaten erfolgt vorzugsweise durch die zentrale Recheneinheit über eine geeignete Internet-Verbindung.

Alle diese beschrieben Kommunikationsmöglichkeiten sind beispielhaft für die erfindungsgemäß vorgeschlagene Datenübertragung und können mit üblichen Techniken ergänzt oder durch andere Kommunikationswege ersetzt werden. Entscheidend ist, dass die zentrale Recheneinheit, die zur Durchführung des erfindungsgemäß vorgeschlagenen Verfahrens eingerichtet ist, sowohl über Raumklimadaten als auch über Außenklimadaten verfügt.

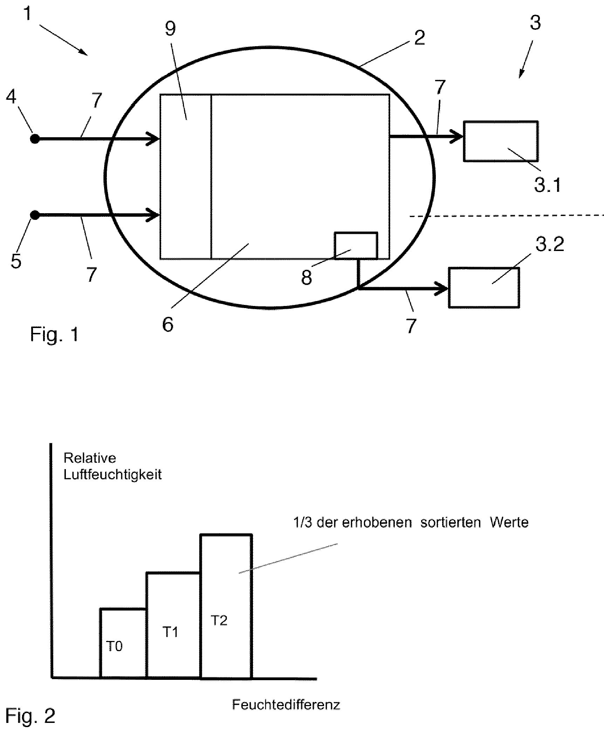

Fig.1 zeigt schematisch und beispielhaft eine erfindungsgemäße Vorrichtung 1 mit einer Datenübertragung 2 von Raumklimadaten und Außenklimadaten an eine zentrale Recheneinheit 3, in der das erfindungsgemäß vorgeschlagene Verfahren durchführt wird, wobei die Raumklimadaten über erste Sensoren 4 erfasst und übertragen werden. Die Außenklimadaten werden durch zweite Sensoren 5 erfasst und übertragen und/oder als lokale Online-Wetterdaten über das Internet abgerufen. Für die Außenklimadaten kann erfindungsgemäß auch einen Kombination von Sensordaten und Online-Wetterdaten vorgesehen sein.

Als Beispiel für die Datenübertragung 2 der Sensordaten ist ein lokales Funknetz mit mindestens einer (dezentralen) Datensammeleinrichtung 6 für die Sensorwerte vorgesehen, über die die Sensordaten 7 an die zentrale Recheneinheit 3 übertagen werden. Ggf. findet eine Weiterleitung der Sensordaten auch über mehrere Datensammeleinrichtungen 6 statt, wobei alle oder einige Datensammeleinrichtungen 6 auch eine Vorrichtung zur Datenfernübertragung 8 aufweisen können.

Entsprechend kann die zentrale Recheneinheit ein lokaler Masterdatensammler 3.1 (im Sinne einer lokalen zentralen Datensammeleinrichtung) oder eine entfernte zentrale Recheneinheit 3.2 sein.

Gemäß einer bevorzugten, aber optionalen Ausgestaltung des Verfahrens weist die mindestens eine Datensammeleinrichtung 6 eine Vorverarbeitungseinrichtung 9 der Sensordaten, vorzugsweise eine Mittelwertbildung über eine vorgebbare Zeitdauer, auf. Entsprechend der durch die Vorverarbeitungseinrichtung 9 durchgeführten Vorverarbeitung wird die Vorverarbeitungseinrichtung 9 auch kurz als Vorverarbeitung (im Sinne des durchgeführten Verfahrensschritts) bezeichnet. Entsprechendes gilt für die weiteren Einzelvorrichtungen der erfindungsgemäßen Vorrichtung, die durch die jeweils ausgeführten Verfahrensschritte bezeichnet werden. Die Einzelvorrichtungen können jeweils Funktionen sein, die zusammengefasst durch ein Programm zur Datenverarbeitung oder einzeln durch mehrere Programme zur Datenverarbeitung ausgeführt werden, zu deren Ausführung die zentrale Recheneinrichtung 3 ausgestattet ist.

Die Vorverarbeitung der durch den Sensor erfassten Daten und/oder der erfassten Online-Wetterdaten in der Datensammeleinrichtung 6 ist optional und wird vorzugsweise zur Optimierung der weitergeleiteten Datenmenge durchgeführt. Diese Optimierung kann insbesondere in einer Reduzierung der erfassten Daten bestehen, um beispielsweise die zentrale Recheneinheit 3 bei der Sensordatenverarbeitung zu entlasten, da durch eine Vorverarbeitung in der Datensammeleinrichtung 6 bereits für das Verfahren aufbereitete Werte an die zentrale Recheneinheit 3 geliefert werden. Eine Vorverarbeitung in diesem Sinne ist darüber hinaus besonders vorteilhaft bei batteriebetriebenen Datensammeleinrichtungen 6, da dadurch die Empfangshäufigkeit der Datensammeleinrichtungen 6, und bei der Weiterleitung der Daten als Repeater oder in einem Meshed-Netzwerk bzw. für einen Masterdatensammler 3.1 auch die Sendehäufigkeit, reduziert werden kann. Dies führt dazu, dass weniger Strom in der Datensammeleinrichtung 6 verbraucht wird, und so eine längere Einsatzdauer der Datensammeleinrichtung 6 ohne Batteriewechsel möglich ist.

Zur Erfassung der Innenraumtemperaturen (Raumlufttemperaturen) können als erste Sensoren 4 handelsübliche Temperaturmesssensoren oder Temperaturmessgeräte verwendet werden, die über einen Funksender, beispielsweise in einem integrierten oder externen Funkmodul, verfügen. In der bevorzugten Ausführung werden als Temperatursensoren die zur Verbrauchserfassung bereits vorhandenen elektronischen Heizkostenverteiler verwendet, die über eine zur Raumtemperaturmessung geeignete Sensorik verfügen. Elektronische, funkfähige Heizkostenverteiler können auch derart ausgestaltet werden, beispielsweise mit einem für die Wandmontage geeigneten Gehäuse, dass sie statt zur Verbrauchserfassung auch nur als funkfähige Raumtemperatursensoren eingesetzt werden können. Vorzugsweise werden elektronische Heizkostenverteiler mit zwei Temperaturfühlern verwendet: einem Heizkörpertemperatursensor zur Messung der Heizkörperoberflächentemperatur und einem Raumlufttemperatursensor zur Messung der Raumlufttemperatur, in ihrer eigentlichen Funktion zur Erfassung der Wärmeabgabe von Heizkörpern und zusätzlich als Sensoren für das erfindungsgemäße Verfahren. Dies ist besonders vorteilhaft, da damit die Kosten des Gesamtsystems deutlich gesenkt werden können. Heizkostenverteiler sind meist auf einer am Heizkörper angeschweißten Montageplatte (Wärmeleiter) montiert und messen die Raumlufttemperatur vor dem Heizkörper.

Für das erfindungsgemäße Verfahren geeignet sind auch elektronische Heizkostenverteiler in einer Ausführung als sogenannte Fernfühlergeräte, bei der nur der (gehäuseexterne) Heizkörpersensor unmittelbar am Heizkörper befestigt ist. Der elektronische Heizkostenverteiler mit dem vorzugsweise direkt in das Gehäuse des Heizkostenverteilers integrierten Raumluftsensor ist dann mittels einer speziellen Vorrichtung an der Wand, meist in der Nähe des Heizkörpers, angebracht. Fernfühlergeräte werden eingesetzt, wenn durch bauliche Gegebenheiten, beispielsweise durch Holzvorbauten, als "Sichtschutz", die an einem Heizkörper gemessen Raumtemperatur aufgrund eines Wärmestaus nicht der tatsächlichen Raumtemperatur entsprechen würde. Die gemessenen Raumtemperaturwerte werden zyklisch mit einem Funktelegramm oder als Teil eines Funktelegramms, beispielsweise als Datenpunkt "Raum-Temperatur" oder als Daten-Tripel bestehend aus "Raum-Temperatur (Wert), Einheit, Zeitstempel" ausgesendet.

Die Messung der Raumtemperatur kann alternativ auch durch an der Raumdecke montierte, vorzugsweise funkfähige Rauchwarnmelder erfolgen. In für das erfindungsgemäße Verfahren als Sensoren geeignete Rauchwarnmelder sind ein oder mehrere Temperatursensoren eingebaut. Der Rauchwarnmelder sendet die gemessene Raum-temperatur zyklisch, vorzugsweise mit einem Funktelegramm oder als Teil eines Funktelegramms, in einem sogenannten Datenpunkt, aus. Dies entspricht dem Vorgehen bei den Heizkostenverteilern.

Die relative oder absolute Innenraumluftfeuchte wird mit Feuchtesensoren gemessen, die über ein Funkmodul oder einen Funksender verfügen und erfindungsgemäß insbesondere zusätzlich zu den Raumtemperatursensoren als erste Sensoren vorgesehen sind. Diese Feuchtesensoren werden an der Raumdecke oder an einer oder mehreren Wänden des Raumes befestigt. Üblicherweise werden Feuchtesensoren an neuralgischen Punkten, d.h. an Stellen im Raum mit einer oftmals erhöhten Feuchteansammlung, angebracht. Neuralgische Punkte sind beispielsweise "Kaltstellen" an der Wand, an der die in der wärmeren Raumluft enthaltene Feuchtigkeit kondensiert. Für das erfindungsgemäße Verfahren ist dies jedoch nicht zwingend erforderlich. Das Einbeziehen solcher neuralgischen Punkte in die Feuchtemessung erhöht aber die Genauigkeit, mit der ein Schimmelpilz- und/oder Feuchteschaden im Raum vorhergesagt werden kann.

Auch ein Feuchtesensor kann in einen Rauchwarnmelder integriert werden. Der Rauchwarnmelder wird dann die Messwerte mit einem entsprechend gestalteten Funktelegramm oder als Teil eines Funktelegramms, beispielsweise als Datenpunkt "rel. Feuchte" übertragen. Auch ein Rauchwarnmelder mit einer kombinierten Temperatur- und Feuchtemessung ist zur Ermittlung der Innenraumtemperatur und der Innenraumfeuchte verwendbar. Zusätzlich zur gemessenen Raumtemperatur (Datenpunkt "Raum-T") wird bei dieser Ausführung des Rauchwarnmelders die gemessene Feuchte (Datenpunkt "rel. Feuchte") übertragen.

Grundsätzlich können auch Heizkostenverteiler mit einem Feuchtesensor ausgestattet werden. Weil sich aber die rel. Feuchte der Luft in der Nähe warmer Heizkörper signifikant ändert, kann der gemessene Wert nicht direkt verwendet werden, sofern der Heizkostenverteiler an einem Heizkörper montiert und zur Erfassung der abgegebenen Wärmemenge verwendet wird. In diesem Fall müsste ggf. eine Korrektur der rel. Feuchte abhängig von der Heizkörpertemperatur vorgenommen werden. Ein Verfahren zur Korrektur der mit einem am Heizkörper befestigten Heizkostenverteiler gemessenen relativen Feuchte, abhängig von der Heizkörpertemperatur, ist nicht Gegenstand des erfindungsgemäßen Verfahrens, für das erfindungsgemäße Verfahren auch nicht unbedingt erforderlich, und wird daher nicht näher beschrieben.

Zur Aufnahme der durch die Temperatur- und Feuchtesensoren (erste Sensoren 4) zyklisch ausgesendeten Funktelegramme mit den Sensordaten 7 werden Datensammeleinrichtungen 6 (Datensammler) verwendet, die vorzugsweise batteriebetrieben sind und mit den Sensoren 4 ein gemeinsames Funknetz bilden. In bidirektionalen Funksystemen, d.h. in Funksystemen, in denen Sensoren 4, 5 auch Funktelegramme empfangen können, weisen alle Geräte jeweils geeignet eingerichtete Sende- und/oder Empfangseinrichtungen auf, um Daten auszutauschen. Für das erfindungsgemäße Verfahren sind jedoch auch Sensoren 4, 5 geeignet, die lediglich über eine Sendeeinrichtung verfügen und spontan oder zu definierten Zeitpunkten Funktelegramme aussenden. Die Datensammeleinrichtungen können dann - in Bezug zu den Sensoren - nur über eine Empfangseinrichtung verfügen. Die Sendeeinrichtung in den Datensammlern ist dann für die Datenübertragung in einem Wide Area Network (WAN), bspw. ein Mobilfunknetzwerk, ausgelegt (im Sinne der Vorrichtung 8 zur Datenfernübertragung).

In einer besonders vorteilhaften Ausgestaltung der erfindungsgemäß vorgeschlagenen Vorrichtung können Rauchwarnmelder zusätzlich zu der originären Funktion der Rauchwarnmeldung als Datensammeleinrichtung 6 verwendet werden, so dass die Kosten des Gesamtsystems nochmals deutlich reduziert werden können, weil Sensoren 4, 5 und/oder Datensammeleinrichtungen 6 zur Verwendung in dem erfindungsgemäß vorgeschlagenen Verfahren in einem Gehäuse zusammen mit anderen, den jeweiligen Geräten originär zugeordneten Funktionen zusammengefasst werden. Gleiches gilt grundsätzlich auch für die Heizkostenverteiler und separate Sensoren.

Solche Rauchwarnmelder, Heizkostenverteiler und/oder separate Sensoren mit integrierter Datensammeleinrichtung 6 zur Datensammlung und -übertragung können ein Funknetzwerk ausbilden oder Bestandteil eines Funknetzes sein, und somit die Sensordaten an die zentrale Recheneinheit 3 übertragen bzw. mit übertragen. Die Rauchwarnmelder, Heizkostenverteiler und/oder separaten Sensoren können in einer weiteren vorteilhaften Ausgestaltung auch als Funktelegramm-Repeater (auch nur als Repeater bezeichnet) ausgestaltet werden.

Die Datensammeleinrichtungen 6 (sowohl als eigenständige Geräte als auch als in die Gehäuse von Rauchwarnmeldern, Heizkostenverteilern und/oder separate Sensoren integrierte Geräte) verfügen über ausreichend Datenspeicher, um empfangene Sensordaten zwischenspeichern zu können. Die Datensammeleinrichtungen 6 empfangen vorzugsweise die Funktelegramme aller Sensoren 4, 5, die in ihrem Empfangsbereich vorhanden sind und für den Empfang durch die Datensammeleinrichtung 6 technisch geeignete Funktelegramme aussenden. In einer für das erfindungsgemäße Verfahren besonders bevorzugten Ausführung wird in der Datensammeleinrichtung eine sogenannte "White-List" als Liste zu empfangender Sender abgelegt, in der nur bestimmte Sensoren aufgelistet sind, so dass der Funkempfang auf solche Sensoren 4, 5 eingeschränkt werden kann, die einem Raum oder einer Nutzeinheit oder einem Gebäudeteil oder dem gesamten Gebäude zugeordnet sind und/oder deren Messwerte für das erfindungsgemäße Verfahren benötigt werden. Damit kann sichergestellt werden, dass Daten von Sensoren 4, 5 beispielsweise aus Nachbargebäuden nicht unnötig zur zentralen Recheneinheit 3 übertragen werden. Das Beschränken des Funkempfangs ist in dem Sinne zu verstehen, dass in der Datensammeleinrichtung 6 empfangene Daten dahingehend ausgewertet werden, von welchem Sender (mit zugeordnetem Sensor 4, 5) diese Daten ausgesendet wurden. Gehören die Daten nicht zu den in der White-List aufgelisteten Sensoren 4, 5, werden die Daten durch die Datensammeleinrichtung 6 verworfen (zumindest im Rahmen der Durchführung dieses Verfahrens). Andere Daten (bspw. im Rahmen der Verbrauchswerterfassung) werden durch diese Datensammeleinrichtung 6 nicht verworfen, sofern die Weiterleitung dieser Daten auch eine Aufgabe der Datensammeleinrichtung 6 (außerhalb des im Rahmen dieser vorgeschlagenen Verfahrens) ist.

Es ist für das erfindungsgemäße Verfahren auch möglich, dass nicht alle installierten funkenden Sensoren 4, 5 verwendet werden bzw. verwendet werden müssen, sondern dass nur eine Mindestanzahl an Sensoren 4, 5 empfangen werden muss. Dies hat den Vorteil, dass bei einer gestörten oder bezüglich der Zuverlässigkeit der Funkstrecken unsicheren Funksituationen das erfindungsgemäße Verfahren auch dann funktioniert, wenn mindestens eine (ggf. einstell- bzw. parametrierbar) vorgegebene Schwelle, bspw. 60% der installierten Sensoren 4, 5, ihre Daten an die zentrale Recheneinheit 3 übertragen konnten. Natürlich kann vorgesehen werden, dass für jeden Sensortyp (bspw. Temperatur, Feuchtigkeit) jeweils ein eigener Schwellwert für die Mindestanzahl von für das erfinderische Verfahren erforderlichen Sensoren 4 ,5 und deren Sensordaten eingestellt wird.

In der bevorzugten Ausführung des erfindungsgemäßen Verfahrens werden zur Verringerung des zu übertragenden Datenvolumens zwischen den Datensammeleinrichtungen 6 und der zentralen Recheneinheit 3 (lokaler Masterdatensammler 3.1 oder entfernte zentrale Recheneinheit 3.2 bzw. Leitstand) aus den in der Regel von den Sensoren 4, 5 als Sensordaten häufig gesendeten Messwerten über eine Vorverarbeitung 9, vorzugsweise eine einfache Mittelwertbildung, beispielsweise ein für das erfindungsgemäße Verfahren besonders geeignetes Stundenmittel für einen "Raum-Temperatur-Stundenmittelwert" und einen "Feuchte-Stundenmittelwert", berechnet, wobei anstelle einer Stunde auch andere geeignete Zeiträume verwendet werden können. Geeignete Zeiträume liegen etwa im Bereich zwischen 0,5 bis 3 Stunden für die Bildung von Stundenmittelwerten.

Die Zeitdauer, über die solche eine Mittelung der von einem Sensor empfangen Sensorwerten erfolgt, kann in der Datensammeleinrichtung 6 von vorne herein abgelegt oder nachträglich parametriert werden. Eine Parametrierung kann beispielsweise über ein Servicetool (Laptop, Tablet, Smartphone oder dergleichen) oder über einen Download von beispielsweise der zentralen Recheneinheit oder einem "Update-Server" erfolgen. Bei der Durchführung des erfindungsgemäßen Verfahrens ist eine Mittelwertbildung über die Werte, die innerhalb etwa einer Stunde erfasst werden, in der Regel sinnvoll.

Auch ist es möglich, dass die Sensoren selbst eine Mittelwertbildung der von ihnen gemessenen Messwerte durchführen, und nur den gemittelten Messwert als Datentelegramm aussenden. Dadurch kann ggf. die Sendehäufigkeit der Sensoren 4, 5 (separate Sensorgeräte, Heizkostenverteiler und/oder Rauchwarnmelder) und in jedem Fall die Empfangshäufigkeit der Datensammeleinrichtungen 6 reduziert werden, was für den Batterieverbrauch vorteilhaft ist. Bilden die Sensoren 4, 5 selbst die Mittelwerte, so muss in der zentralen Recheneinheit 3 die Zeitdauer über die Mittelwertbildung bekannt sein. Alternativ oder ergänzend kann auch die Zeitdauer der Mittelwertbildung als Teil der Sensordaten 7 übertragen werden.

Sofern keine durch das verwendete System bedingten Restriktion vorliegt (wie beispielsweise die bei batteriebetrieben Geräten übliche Restriktion "nicht zu häufiges Senden, um Strom zu sparen, damit die gewünschte Einsatzdauer erreicht wird"), ist es auch möglich, die für das erfindungsgemäße Verfahren vorteilhafte Mittelwertbildung erst in der mit ausreichender Rechenleistung ausgestatteten zentralen Recheneinheit 3 durchzuführen, da dann die Sensoren 4, 5 und die Datensammeleinrichtungen 6 ohne zusätzliche Logik und die dafür benötigte Rechenkapazität, also einfacher, ausgestaltet sein können. Vorteilhaft ist in dieser Variante auch, dass die jeweils aktuell erfassten Messwerte mit einem Zeitstempel versehen in der zentralen Recheneinheit 3 vorliegen, so dass in der zentralen Recheneinheit 3 die Genauigkeit des erfindungsgemäß vorgeschlagenen Verfahrens, die Reaktionszeiten und/oder die Häufigkeit der Durchführung des erfindungsgemäßen Verfahrens frei bestimmt und den aktuellen Bedingen dynamisch angepasst werden können.

Die Erfassung der am Gebäude aktuell vorliegenden Außenklimadaten, insbesondere die Außenlufttemperatur und die relativen oder absolute Außenluftfeuchte, erfolgt messtechnisch mit geeigneten, vorzugsweise funkfähigen (zweiten) Sensoren 5 bspw. zeitgleich und analog zur Erfassung der Innenraumklimadaten mit den (ersten) Sensoren 4. So können die Sensorwerte - sofern der Sensor 4, 5 dies ermöglicht - mit einem Zeitstempel versehen werden. Die von den Außensensoren mit einem Funktelegramm zyklisch übertragenen Außenklimadaten (Gebäudeaußensensordaten) werden vorzugsweise mittels derselben Datenübertragung, unter Verwendung derselben Datensammeleinrichtungen 6, an die zentrale Recheneinheit 3 übertragen.

Bspw. können die Funktelegramme mit den Außenklimadaten von vorzugsweise im Gebäude installierten Datensammeleinrichtungen 6 empfangen und an die zentrale Recheneinheit 3 unmittelbar oder über als Repeater ausgebildete Datensammeleinrichtungen 6 weitergeleitet werden. Bei einer als Masterdatensammler 3.1 lokal im Gebäude ausgebildeten zentralen Recheneinheit 3 können die Außenklimadaten ggf. auch direkt über eine in dem Masterdatensammler 3.1 enthaltene Funkempfangseinrichtung für die Funktelegramme der Sensoren 4, 5 empfangen werden.

Auch bei den Außenklimadaten ist beispielsweise eine Mittelwertbildung vor der Weiterleitung durch die Datensammeleinrichtung 6 möglich. Die Datensammeleinrichtung 6 kann, in einer geeigneten Gehäuseausführung und mit einer für die Installation im Außenbereich ausgelegter Elektronik, auch im Außenbereich des Gebäudes bspw. an einer Laterne oder in sogenannten "Laubengängen" befestigt sein. Bei für den Einsatz im Außenbereich ausgestalteten Datensammeleinrichtungen 6 ist es vorteilhaft, Au-ßenklimasensoren 5 innerhalb der Datensammeleinrichtung anzuordnen, so dass auf eine Funkdatenübertragung zumindest dieser Sensoren 5 verzichtet werden kann.

Die vorzugsweise per Funkdatenübertragung übertragenen Raum- und Außenklimadaten werden in der zentralen Recheneinheit 3 vorzugsweise in einem nichtflüchtigen Speicher abgelegt.

Alternativ zu einer Messung der Außenklimadaten am Gebäudestandort können die Außenklimadaten anhand einer Abfrage der lokalen Außenklimadaten als Online-Wetterdaten vom Deutschen Wetterdienst (DWD) oder entsprechender Dienstanbieter erhalten werden. Beispielsweise bietet der DWD mit einem Onlinezugang die Übertragung der lokalen Außenklimadaten über das Internet an. Die DWD-Außenklimadaten können zur Durchführung des erfindungsgemäßen Verfahrens verwendet werden, da mit diesen Daten des DWD eine hinreichende Genauigkeit bezüglich der Berücksichtigung der Einflussgröße "Außenklima" bei der Durchführung des erfindungsgemäßen Verfahrens gegeben ist.

Ist die zentrale Recheneinheit 3 lokal bspw. als Masterdatensammler 3.1 im Gebäude installiert, so ist sie mit einem für das erfindungsgemäße Verfahren geeigneten Mikroprozessor und mit einem für das erfindungsgemäße Verfahren ausreichendem Datenspeicher ausgestattet. Ist die zentrale Recheneinheit 3 als Teil einer entfernten zentralen Recheneinheit 3.2 wie einem Leitstand (bspw. eines IT-Systems einer Hausverwaltung oder eines IT-Systems eines Verbrauchsabrechnungs-Dienstleisters) ausgebildet, so kann von einer ausreichenden Rechenleistung und Speicherkapazität ausgegangen werden.

Die Bewertung der Sensormesswerte als Teil der Sensordaten und der rechnerisch abgeleiteten Kenngrößen zur Ermittlung der Wahrscheinlichkeit von Schimmelpilz und/oder Feuchteschäden erfolgt mittels Auswertung von mindestens einer in der zentralen Recheneinheit hinterlegten Wahrscheinlichkeitstabelle. Bevorzugt können mehrerer Wahrscheinlichkeitstabellen in Abhängigkeit von mindestens zwei Kennwerten geführt werden, die quantifizierte Wahrscheinlichkeiten auf Basis der Tertile oder Quartile beinhalten.

Allgemein werden unter Tertilen diejenigen Punkte verstanden, die eine größengeordnete Verteilung einer betrachteten Größe in drei Teile (I II III) aufteilt, wobei jeder Teil ein Drittel der Werte der betrachteten Größe enthält.

Dies wird anhand eines in Fig. 2 dargestellten Beispiels erläutert, das die Tertile einer Häufigkeitsverteilung für das Auftreten von Feuchteschäden in Abhängigkeit des Kennwerts "relative Luftfeuchte" zeigt.

Wenn eine Häufigkeitsverteilung in drei gleichgroße Flächen I, II und III zerlegt wird, ergeben sich die Tertile T0, T1 und T2 der Häufigkeitsverteilung entlang der Trenngeraden der Flächen I und II bzw. II und III. In diesem Beispiel liegen die Tertile bei einer relativen Luftfeuchtigkeit von etwa 42% und 50%. Mit anderen Worten treten in den drei Bereichen der relativen Luftfeuchtigkeit

T0: von 0% bis 42%
T1: von 42% bis 50%
T2: von 50% bis 100%
jeweils gleichhäufig Feuchteschäden auf. Derartige Werte können aus empirischen Erhebungen gewonnen werden.

Für eine Aufteilung einer Häufigkeitsverteilung in vier gleichgroße Flächen gilt dasselbe entsprechend. In diesem Fall spricht man von Quartilen, die als erfindungsgemäß bevorzugte Variante auch eingesetzt werden können.

Die Wahrscheinlichkeitstabellen können, insbesondere als Prävalenzkennfelder, anhand von Datenerhebungen aus Objektbegehungen durch geschultes Personal und/oder Interviews mit Nutzern empirisch erstellt und für einen Zugriff durch die zentralen Recheneinheit hinterlegt werden.

In einer oder mehreren der erfindungsgemäßen Wahrscheinlichkeitstabellen wird eine Wahrscheinlichkeit von Schimmelpilz- und/oder Feuchteschäden in Abhängigkeit von mindestens zwei Kennwerten aufgrund empirischer Erfahrungswerte beschrieben. Besonders bevorzugt ist für die Ermittlung der Wahrscheinlichkeit von Schimmelpilz- oder Feuchteschäden die Verwendung von einer Wahrscheinlichkeitstabelle in Abhängigkeit der Kennwerte Innenraumluftfeuchte und Feuchtedifferenz.

Dies erfolgt vorzugsweise durch eine als zweidimensionales Prävalenzkennfeld aufgebaute Wahrscheinlichkeitstabelle, in dem die Prävalenz von Schimmelpilz- und/oder Feuchteschäden in Abhängigkeit der Kennwerte angegeben ist, insbesondere der Kennwerte Innenraumluftfeuchte und Feuchtedifferenz.

Allgemein gibt die Prävalenz eines Ereignisses (im konkreten Fall eines Schimmelpilz- und/oder Feuchteschadens) an, wie oft das Ereignis (ein Schimmelpilz- und/oder Feuchteschaden) in einer Einheit (bspw. Raum, Wohnung, Gebäude, Liegenschaft) bezogen auf die Anzahl der untersuchten Einheiten (Raum, Wohnung, Gebäude, Liegenschaft) aufgetreten ist. Eine solche Prävalenz für den Eintritt des Ereignisses (Schimmelpilz- und/oder Feuchteschaden) kann für verschiedene Kennwerte oder Kombinationen von Kennwerten empirisch ermittelt bzw. erhoben werden. Bei der empirischen Erhebung werden dazu mehrere Einheiten (bspw. durch eine Begehung mit geschultem Personal) untersucht, die zugehörigen Kennwerte erfasst, das Auftreten eines Ereignisses gezählt und in Verhältnis zu den insgesamt untersuchten Einheiten gesetzt.

Die ermittelte Prävalenz gibt dann (bspw. in %) an, wie oft die untersuchte Größe bezogen auf Anzahl der untersuchten Einheiten auftritt, und stellt insofern eine Wahrscheinlichkeit dar.

Die in der zentralen Recheneinheit hinterlegten Wahrscheinlichkeitstabellen ermöglichen, beispielsweise in Abhängigkeit der Messwerte Außentemperatur ($\vartheta_A$), relative Luftfeuchte außen ($\varphi_A$), Rauminnentemperatur ($\vartheta_I$), relative Luftfeuchte innen ($\varphi_I$) und ggf. weiteren aus den Messwerten errechneten und den thermischen und hygrischen Zustand der Raumluft charakterisierenden Parametern, die Bildung einer Indizienkette zur zuverlässigen Vorhersage der Wahrscheinlichkeit des Auftretens von Schimmelpilzbefall (d.h. dem Auftreten von Schimmelpilzschäden) und/oder Feuchteschäden.

Für Bewertungszeiträume, beispielsweise Stundenintervalle von einer Stunde oder ein bis drei Stunden (oder andere geeignet definierte Bewertungszeiträume), werden mit dem erfindungsgemäßen Verfahren die Wahrscheinlichkeiten / Prävalenzklassen für Schimmelpilz- / Feuchteschäden im Stundenintervall bestimmt und nachfolgend, nach einer vorgegeben Mindestanzahl an Stundenintervallen, wird die Häufigkeitsverteilung in der Prävalenzklassen ermittelt.

So wird die Risikoklasse für das Auftreten von Schimmelpilz- und/oder Feuchteschäden erhalten und kann dem Nutzer in einer vorzugsweise als "einfache Ampel" gestalteten Anzeigevorrichtung beispielsweise auf einem "In-Home-Display" grafisch oder textlich angezeigt werden. Alternativ oder ergänzend wird das Ergebnis an ein Informationssystem für den Nutzer und/oder an die Hausverwaltung und/oder an den Eigentümer des Gebäudes weitergeleitet.

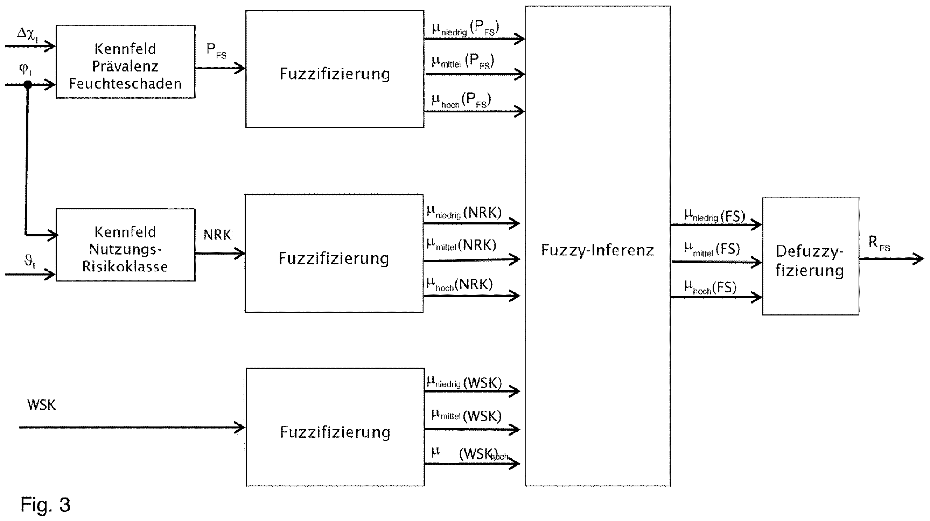

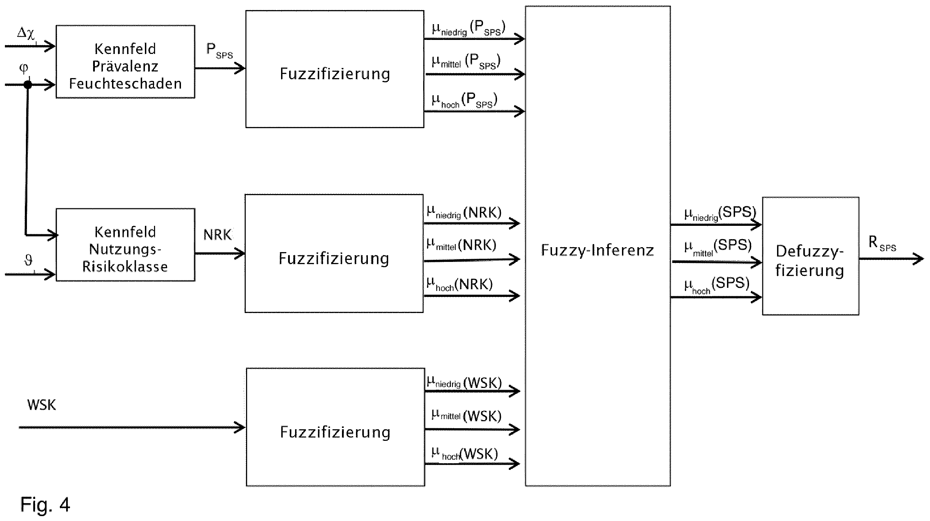

Eine erste erfindungsgemäße Ausführung zur Ermittlung der Wahrscheinlichkeit für Feuchteschäden in einem Bewertungszeitraum ist in Fig. 3 dargestellt. Die Ermittlung der Wahrscheinlichkeit für Schimmelpilzschäden in einem Bewertungsintervall ist in Fig. 4 gezeigt. Das Vorgehen zur Ermittlung der Wahrscheinlichkeit für Feuchteschäden und für Schimmelpilzschäden ist bis auf die verwendeten Kennfelder identisch, so dass sich die nachfolgende Beschreibung des erfindungsgemäßen Verfahrens im Wesentlichen auf die Ermittlung der Wahrscheinlichkeit für Feuchteschäden für ein Bewertungsintervall beschränkt. Das erfindungsgemäß vorgeschlagene Verfahren zur Ermittlung der Wahrscheinlichkeit für Schimmelpilzschäden läuft genau entsprechend, so dass die Beschreibung entsprechend für diesen Fall gültig ist.

Wie in Fig. 3 und Fig. 4 dargestellt, sind die Eingangsgrößen für die Durchführung des Verfahrens zur Ermittlung der Wahrscheinlichkeit für Feuchteschäden (Fig. 3) und Schimmelpilzschäden (Fig. 4) für ein Bewertungsintervall, vorzugsweise ein Stundenintervall, die aus Messwerten rechnerisch ermittelte Feuchtedifferenz ($\Delta_\chi$), die gemessene relative Raumluftfeuchte ($\varphi_I$), die gemessene Raumtemperatur ($\vartheta_I$) und die anhand von Gebäudekenndaten ermittelte Wärmeschutzklasse (WSK) des Gebäudes.

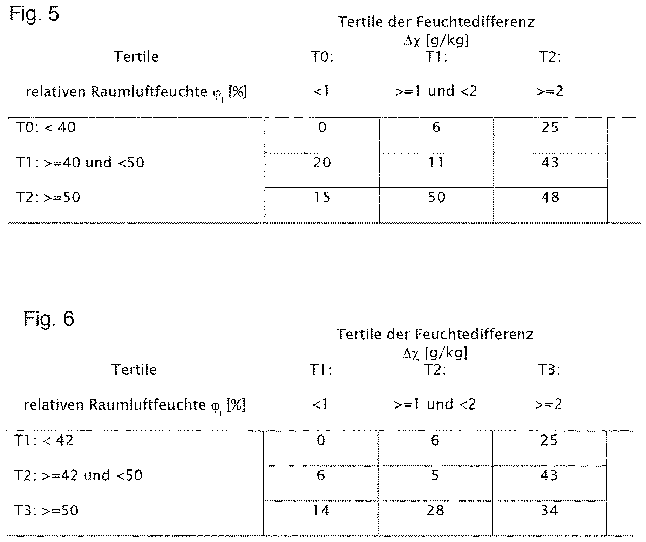

Fig.5 zeigt bespielhaft ein als Tabelle ausgebildetes Kennfeld zur Bestimmung der Prävalenz von Feuchteschäden $P_{FS}$, wobei der Begriff "Prävalenz" auch als Kurzform für "Prävalenzwert" verwendet wird. Mit den gemessenen Werten der relativen Raumluftfeuchte ($\varphi_I$) und der rechnerisch bestimmten Feuchtedifferenz ($\Delta\chi$) wird anhand der Kennlinie aus den Tertilen der relativen Raumluftfeuchte ($\varphi_I$) und den Tertilen der Feuchtedifferenz ($\Delta\chi$) die Prävalenz von Feuchteschäden ($P_{FS}$) bestimmt. Beispielsweise ergibt sich bei einer relativen Raumluftfeuchte von 51% und einer Feuchtedifferenz von 2,5 g/kg die Prävalenz von Feuchteschäden $P_{FS}$ zu 48%.

Fig.6 zeigt das Kennfeld zur Bestimmung der Prävalenz von Schimmelpilzschäden. Bei den gleichen Werten einer relativen Raumluftfeuchte von 51% und einer Feuchtedifferenz von 2,5 g/kg ergibt sich die Prävalenz von Schimmelpilzschäden $P_{SPS}$ zu 34%.

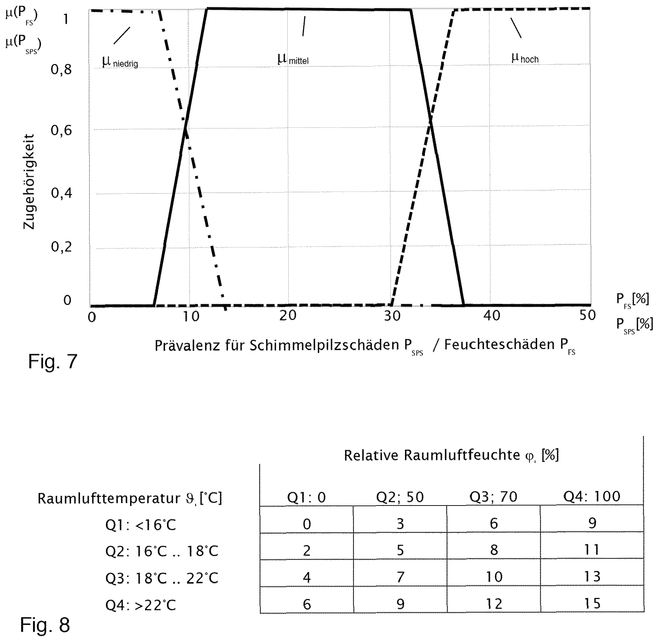

Fig.7 zeigt beispielhaft eine mögliche und für das erfindungsgemäße Verfahren geeignete Zugehörigkeitsfunktion, anhand derer die Werte für die Zugehörigkeitsgrade der Prävalenz für Feuchteschäden $\mu_{niedrig}(P_{FS})$, $\mu_{mittel}(P_{FS})$ und $\mu_{hoch}(P_{FS})$ und für Schimmelpilzschäden $\mu_{niedrig}(P_{SPS})$, $\mu_{mittel}(P_{SPS})$ und $\mu_{hoch}(P_{SPS})$ ermittelt werden. In der grafischen Darstellung der Zugehörigkeitsfunktion sind der Prävalenzwert auf der Abszisse (horizontale oder x-Achse) und der Zugehörigkeitsgrad (Wert der Zugehörigkeitsfunktion für einen Prävalenzwert) auf der Ordinate (vertikale oder y-Achse) dargestellt.

In Anwendung einer Fuzzy-Logik erfolgt eine Fuzzyfizierung des Prävalenzwerts für Feuchteschäden ($P_{FS}$) anhand der in Fig. 7 dargestellten Zugehörigkeitsfunktionen. Die Zugehörigkeitsfunktionen stellen in der Fuzzy-Logik Zustandsbeschreibungen dar, die bestimmte Werte einer Variable, hier des zuvor ermittelten Prävalenzwerts, mit einem gewissen Zugehörigkeitswert einer bestimmten Zugehörigkeitsfunktion belegen. Die Zuweisung der Werte kann bspw. anhand des in den Fig. 7 dargestellten Funktionsverlaufs erfolgen.

Dies wird nachfolgend beispielhaft für die Zugehörigkeitsfunktionen "niedrig", "mittel" und "hoch", die auf den Prävalenzwerts für Feuchteschäden ($P_{FS}$) angewendet werden, anhand von Fig. 7 erläutert. Dieses Grundprinzip gilt für alle erfindungsgemäß vorgeschlagenen Zuordnungen von Variablen zu konkreten Werten von Zugehörigkeitsfunktionen bei der Fuzzyfizierung, so dass im Folgenden dann nur noch auf die entsprechenden Figuren verwiesen wird.

Die Zugehörigkeitsfunktion "niedrig" ist in Fig. 7 strichpunktiert, die Zugehörigkeitsfunktion "mittel" durchgezogen und die Zugehörigkeitsfunktion "hoch" gestrichelt dargestellt. Die entsprechenden Werte der Zugehörigkeitsfunktionen, hier Werte zwischen 0 und 1, können auf der y-Achse abhängig von der Variablen (x-Achse) zugewiesen werden. Die Zugehörigkeitsfunktionswerte $\mu_{niedrig}(P_{FS})$ (niedrig), $\mu_{mittel}(P_{FS})$ (mittel) und $\mu_{hoch}(P_{FS})$ (hoch) werden für einen bestimmten Wert der Variablen, hier den Prävalenzwert für Feuchteschäden ($P_{FS}$), aus Fig. 7 abgelesen.

Dies wird nachfolgend anhand eines Beispiels erläutert. Für einen Wert von 48% für den Prävalenzwerts für Feuchteschäden ($P_{FS}$) ergeben sich die folgenden drei Zugehörigkeitsfunktionswerte:

$$\mu_{niedrig}(P_{FS)} = 0$$

$$\mu_{mittel}(P_{FS}) = 0$$

$$\mu_{hoch}(P_{FS}) = 1$$

Für einen Wert von 35% für den Prävalenzwerts für Feuchteschäden ($P_{FS}$) ergeben sich die folgenden drei Zugehörigkeitsfunktionswerte:

$$\mu_{niedrig}(P_{FS)} = 0$$

$$\mu_{mittel}(P_{FS}) = 0,6$$

$$\mu_{hoch}(P_{FS}) = 0,6$$

Diese Werte der Zugehörigkeitsfunktionen werden nachfolgend an eine Fuzzy-Inferenz weitergegeben, die die Regelbasis für die Ermittlung des Erwartungswerts für die Wahrscheinlichkeit des Risikos von Feuchteschäden bildet.

Entsprechendes gilt für die Prävalenz für Schimmelpilzschäden, die aus Fig. 7 abgeleitet werden können.

Die Nutzungsrisikoklasse (NRK) ist ein weiterer die Raumluft repräsentierender Kennwert, der - wie in den Fig. 3 und 4 dargestellt - für das erfindungsgemäße Verfahren als Eingangsgröße geeignet ist. Die Raumluft wird durch die Anzahl von Nutzern und das umbaute Volumen (Raumvolumen/-fläche in m$^2$) beeinflusst. Die Nutzungsrisikoklasse ist gekennzeichnet durch die Höhe des Eintrags an Feuchtigkeit in einen Raum bzw. in eine Nutzeinheit. In Räumen mit häufiger Nutzung, bspw. dem Wohnzimmer, ist ebenfalls mit einem erhöhten Feuchteeintrag zu rechnen. Die entsprechenden Daten, wie bspw. die Raumart, können bspw. vor Ort aufgenommen und in die IT-Systeme bspw. der Hausverwaltung oder eines Servicedienstleisters übernommen werden. In einer ersten Ausführung kann anhand von Erfahrungswerten beispielsweise aus Studien der Raumart ein Nutzungsverhalten und dann eine Nutzungsrisikoklasse zugeordnet werden.

Es hat sich empirisch gezeigt, dass mit einer gemessenen Raumtemperatur $\vartheta_I$ und einer gemessenen relativen Innenraumfeuchte $\varphi_I$ als Eingangsgrößen die Nutzungsrisikoklasse NRK gut abgeschätzt werden kann, und somit auf die Verwendung eigenständig ermittelter Daten zur Raumart verzichtet werden kann.. Ein entsprechendes Kennfeld für Bestimmung der Nutzungsrisikoklasse NRK insbesondere durch die zentrale Recheneinheit kann bspw. im Datenspeicher der zentralen Recheneinheit bspw. als Speichertabelle oder in anderer auslesbarer Form hinterlegt sein. Entscheidend ist, dass bei der Durchführung des erfindungsgemäßen Verfahrens auf dieses Kennfeld für die Nutzungsrisikoklasse zugegriffen werden kann. Dies wäre grundsätzlich auch über einen Online-Datenzugriff auf ein entsprechendes Kennfeld möglich, das bspw. durch einen Dienstleister aufgrund jeweils aktueller Daten gepflegt und zum Abruf bereitgestellt wird. Entsprechendes gilt natürlich auch für das Kennfeld für die Prävalenz, das bereits erläutert wurde.

In Fig.8 ist beispielhaft ein als Tabelle ausgebildetes Kennfeld zur Ermittlung der Nutzungsrisikoklasse NRK gezeigt. Dieses Kennfeld ist in Quartile eingeteilt. Aus diesem Kennfeld ergibt sich beispielsweise bei einer Raumtemperatur von weniger als 16°C und einer relativen Raumluftfeuchte von 70% die Nutzungsrisikoklasse NRK=6.

Für die sich ergebende Nutzungsrisikoklasse (NRK) wird bevorzugt ebenfalls eine Fuzzyfizierung mittels für das erfindungsgemäße Verfahren geeignet gewählten Zugehörigkeitsfunktionen durchgeführt, aus denen die Zugehörigkeitsgrade der Nutzungsrisikoklasse $\mu_{niedrig}(NRK)$, $\mu_{mittel}(NRK)$ und $\mu_{hoch}(NRK)$ ermittelt werden.

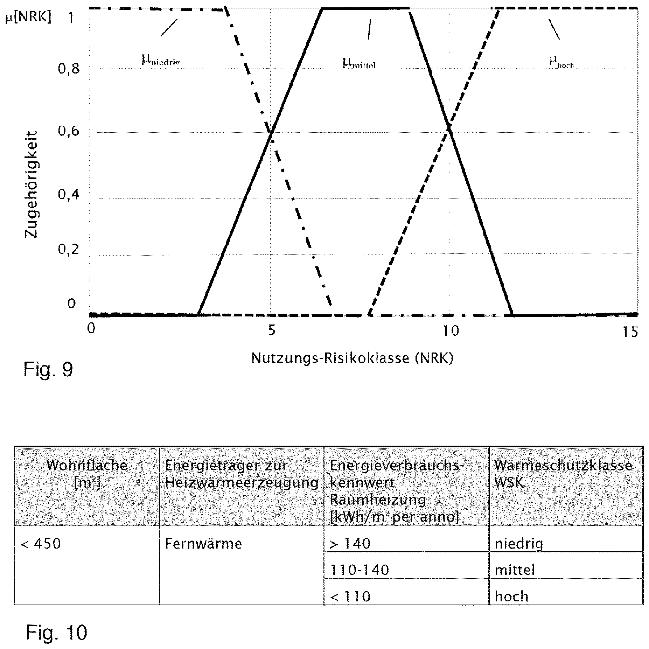

Für das erfindungsgemäße Verfahren mögliche Zugehörigkeitsfunktionen sind in Fig.9 beispielhaft dargestellt. Mit dem im Beispiel ermittelten Nutzungsrisikofaktor NRK=6 ergeben sich anhand der Fig.9 die Zugehörigkeitsgrade

$$\mu_{niedrig}(NRK) = 0,2,$$

$$\mu_{mittel}(NRK) = 0,6$$

$$\mu_{hoch}(NRK) = 0.$$

Die erhaltenen Zugehörigkeitsgrade $\mu_{niedrig}(NRK)$, $\mu_{mittel}(NRK)$ und $\mu_{hoch}(NRK)$ der Nutzungsrisikoklasse werden bei der weiteren Durchführung des erfindungsgemäßen Verfahrens wie später noch detaillierter beschrieben verwendet, um das Ergebnis der Wahrscheinlichkeit für einen Schimmelpilz- und/oder Feuchteschaden zu ermitteln. Wie in dem Ausführungsbeispiel nach Fig.3 dargestellt, kann als eine weitere Kenngröße für das erfindungsgemäße Verfahren die Wärmeschutzklasse (WSK) des Gebäudes verwendet werden. Die Wärmeschutzklasse bildet den energetischen Zustand, und somit das Wärmeschutzniveau, des Gebäudes ab. Zur Ermittlung der Wärmeschutzklasse werden die Parameter zum Gebäudebauzustand, wie vorhandene Gebäudemängel, Art der Gebäudedämmung, die Gebäudebauweise/-material eines Gebäude und/oder einer Nutzeinheit im Gebäude und/oder einer Raumeinheit in der Nutzeinheit beispielsweise durch Objektbegehung aufgenommen oder, sofern vorhanden, aus dem IT-System der Hausverwaltung oder dem IT-System eines Servicedienstleisters bezogen. Wird das Verfahren im IT-System der Hausverwaltung als zentraler Recheneinheit ausgeführt, so sind die Gebäudedaten üblicherweise in einer Datenbank enthalten und diese Daten können unmittelbar, beispielsweise durch Datenbankabfrage, für das erfindungsgemäße Verfahren verwendet werden.

Der Heizenergieverbrauch zur Raumheizung eines Gebäudes steht im direkten Zusammenhang mit dessen Wärmeschutzniveau. Je schlechter das Wärmeschutzniveau, desto höher sind die Energieverluste und somit der Energieverbrauch in dem Gebäude. Die Energieverbrauchskennzahl $EV_h$ für Raumheizung ist eine geeignete Kennzahl, um den Heizenergieverbrauch eines Gebäudes zu charakterisieren.

Die Energieverbrauchskennzahl $EV_h$ für die Raumheizung des Gebäudes wird in der Regel rückschauend für eine 12-Monats-Heizperiode (per anno) erstellt. Erfindungsgemäß kann diese Energieverbrauchskennzahl $EV_h$ aus den Daten der Jahresheizkostenabrechnung berechnet werden, beispielsweise aus der Datenbank des IT-Systems eines Abrechnungsdienstleisters oder des IT-Systems des Gebäudebetreibers (Hausverwaltung), insbesondere nach Übermittlung der Daten zur Heizkostenabrechnung durch den Abrechnungsdienstleister. Mögliche, sich bspw. durch Sanierungsmaßnahmen ergebende Änderungen im energetischen Zustand des Gebäudes können auf diese Weise einfach berücksichtigt werden, indem die Energieverbrauchskennzahl $EV_h$ für die Raumheizung jährlich, beispielsweise unmittelbar nach dem Vorliegen aktueller Abrechnungsdaten, neu berechnet bzw. aktualisiert wird. Die jeweils neu berechnete Energieverbrauchskennzahl $EV_h$ für Raumheizung (auch als Energieverbrauchskennwert bezeichnet) kann durch Download in die zentrale Recheneinheit oder Update des IT-Systems aktualisiert werden, aus dem die jeweils aktuelle Energieverbrauchskennzahl $EV_h$ für das jeweilige Gebäude bspw. als Online-Daten über das Internet (gesichert) abrufbar ist. Wird eine Heizkostenabrechnung häufiger im Jahr durchgeführt, so kann die Energieverbrauchskennzahl $EV_h$ für die Raumheizung auch häufiger in der zentralen Recheneinheit und/oder im IT-System aktualisiert werden.

Gemäß einer ersten Ausführung des erfindungsgemäß vorgeschlagenen Verfahrens kann die das Wärmeschutzniveau eines Gebäudes kennzeichnenden Wärmeschutzklasse WSK aus dem Energieverbrauchskennzahl für die Raumheizung $EV_h$, die einen flächenbezogenen Verbrauch in kWh/(m$^2$, anno) darstellt, abgeleitet werden.

In einer alternativen Ausführung zu der Wärmeschutzklasse WSK kann als Kennwert für die Wärmedämmung des Gebäudes ein mit erfassten Sensormesswerten berechenbarer Temperaturfaktor $f_{RSi}$ ermittelt werden. Diese Variante wird später noch detaillierter beschrieben.

Eine weitere erfindungsgemäße Möglichkeit zur Bestimmung der Wärmeschutzklasse WSK eines Gebäudes ist es, den Wärmedurchgangskoeffizienten (u-Wert) der Gebäudehülle beispielsweise im Zusammenhang mit einer Wärmebedarfsberechnung für das Gebäude zu berechnen oder rechnerisch einen Wärmebedarfswert für die Raumheizung zu bestimmen und hieraus die Wärmeschutzklasse WSK abzuleiten. Die Verfahren zur Bestimmung des Wärmedurchgangskoeffizienten der Gebäudehülle oder des Wärmebedarfswerts für die Raumheizung sind im Rahmen der Dimensionierung von Heizungsanlagen in Gebäuden bekannt und müssen an dieser Stelle nicht näher beschrieben werden.

Die Herleitung von für das erfindungsgemäße Verfahren geeigneten Zugehörigkeitsfunktionen für die Wärmeschutzklasse ist zur besseren Veranschaulichung als Tabelle in Fig. 10 dargestellt.

In einer besonders vorteilhaften Ausführung der Erfindung wird der Gesamtenergieverbrauch eines Gebäudes für die Raumheizung anhand der Verbrauchsdaten aus der Heizkostenabrechnung auf die Nutzeinheiten (bspw. jeden Raum oder jede Wohnung) im Gebäude verteilt. Diese Verteilung ist möglich, sofern die Information zum Installationsort eines Sensors 4, beispielsweise eines Heizkostenverteilers, in der zentralen Recheneinheit 3 bekannt ist. Mit der Kenntnis der Gesamtverbrauchswerts für die Raumheizung einer Nutzeinheit und der Größe der Nutzeinheit kann für diese Nutzeinheit gezielt die Energieverbrauchskennzahl bzw. der Energieverbrauchskennwert $EV_{h,NE}$ für diese Nutzeinheit ermittelt werden. Zur Ermittlung der Wahrscheinlichkeit eines Schimmelpilz- und/oder Feuchteschadens für die gezielt ausgewählte Nutzeinheit wird dann die zugehörige Energieverbrauchskennzahl $EV_{h,NE}$ verwendet. Hierdurch werden automatisch bspw. innen und außen liegende Räume bzw. Räume mit großem oder kleinem Außenwandanteil, entsprechend berücksichtigt.

Die in Fig. 10 angegebenen Zahlenwerte für den Energieverbrauchskennwert $EV_h$ und die Zuordnung zu einer Wärmeschutzklasse WSK basieren auf bekannten und/oder proprietären statistischen Erhebungen. Diese müssen für den Einzelfall nicht 100%-ig zutreffen, erlauben jedoch eine grundsätzliche Einordnung von Gebäuden, die zu einer erhöhten Prognosegenauigkeit für das Auftreten von Schimmelpilz- und/oder Feuchteschäden führt.

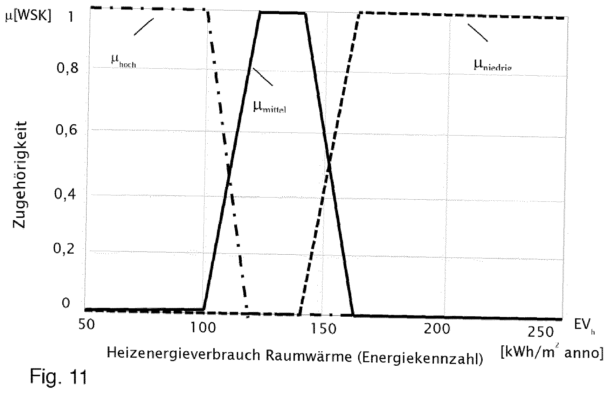

In Fig. 11 sind für das erfindungsgemäße Verfahren beispielhaft geeignet gewählte Zugehörigkeitsfunktionen zur Bestimmung der Zugehörigkeitsgrade der Wärmeschutzklasse $\mu_{niedrig}$(WSK), $\mu_{mittel}$(WSK) und $\mu_{hoch}$(WSK) dargestellt. Beispielsweise ergeben sich aus Fig. 11 bei einer durch die Energieverbrauchskennzahl $EV_h$ für Raumheizung von 155 kWh/(m², anno) definierten Wärmeschutzklasse WSK die Zugehörigkeitsgrade zu:

$$\mu_{niedrig}(WSK) = 0{,}5$$

$$\mu_{mittel}(WSK) = 0{,}5$$

$$\mu_{hoch}(WSK) = 0.$$

Die erhaltenen Zugehörigkeitsgrade $\mu_{iedrig}$(WSK), $\mu_{mittel}$(WSK) und $\mu_{hoch}$(WSK) der Wärmeschutzklasse WSK werden bei der weiteren Durchführung des erfindungsgemäßen Verfahrens wie später noch detaillierter beschrieben verwendet, um das Ergebnis der Wahrscheinlichkeit für einen Schimmelpilz- und/oder Feuchteschaden zu ermitteln. In den in den Fig. 3 bzw. 4 gezeigten Ausführungsbeispielen für Feuchteschäden bzw. Schimmelpilzschäden werden als Eingangsgrößen für die Ermittlung der Schadenswahrscheinlichkeit ein Prävalenzwert (Prävalenz) für Feuchte- bzw. Schimmelpilzschäden $P_{FS}$ bzw. $P_{SPS}$, eine Nutzungsrisikolasse NRK und eine Wärmeschutzklasse WSK verwendet. Dies stellt eine besonders bevorzugte Ausführungsform dar, weil neben der Prävalenz P für den jeweiligen Schaden auch die Risikoeinflüsse durch die Nutzung der Gebäude (Nutzungsrisikoklasse NRK) und durch die baulichen Gebäudeeigenschaften (Wärmeschutzklasse WRK) mit abgeschätzt werden.

Grundsätzlich wäre eine Risikoaussage nach dem erfindungsgemäßen Verfahren alleine aufgrund der Prävalenz für den Feuchte- bzw. Schimmelpilzschaden $P_{FS}$ bzw. $P_{SPS}$ möglich. Die Berücksichtigung der weiteren Risikoeinflüsse durch die Nutzung des Gebäudes und/oder der baulichen Gebäudeeigenschaften wird die Prognosegenauigkeit verbessert. Ein besonderer Vorteil des erfindungsgemäß vorgeschlagenen Verfahrens liegt darin, dass durch die Verwendung der vorgeschlagenen Kennfelder für die Prävalenz $P_{FS}$ bzw. $P_{SPS}$ und ggf. die weiteren Risikoeinflüsse eine Einschätzung für das Gebäude aufgrund von jeweils aktuellen Messwerten des thermischen (Temperatur) und des hygrischen (Feuchtigkeit) Zustands von Gebäuden bzw. Räumen in Gebäuden möglich ist, ohne dass bei jeder aktuellen Abschätzung weitere Daten erhoben werden müssen.

Grundsätzlich lässt sich das erfindungsgemäß vorgeschlagene Verfahren auf die Berücksichtigung weiterer Risikoeinflüsse ausdehnen, wobei es besonders vorteilhaft wäre, auch diese weiteren Risikoeinflüsse (so wie die zuvor beschriebenen Risikoeinflüsse) entsprechend einem der erfindungsgemäßen Grundsätze durch konkrete aktuelle Messwerte in oder an dem Gebäude ableiten zu können. Dies ermöglicht eine präzise aktuelle Abschätzung des Risikos ohne konkrete Kenntnis der tatsächlichen Risiko-Einflussfaktoren. Die tatsächlichen Risiko-Einflussfaktoren werden erfindungsgemäß durch (vorzugsweise empirisch-statistisch generierte Kennfelder ersetzt, die einen vereinfachten Zusammenhang zwischen den tatsächlichen Risiko-Einflussfaktoren und den einfach messbaren Größen herstellen.

In den Fig. 3 bzw. 4 ist nun für das beschriebene Ausführungsbeispiel die Bewertung der Eingangsgrößen Prävalenz P, Nutzungsrisikoklasse NRK und Wärmeschutzklasse WSK im Rahme der erfindungsgemäß verwendeten Fuzzy-Logik dargestellt, wobei die Ermittlung der verschiedenen Zugehörigkeitsgrade $\mu$ zu den Eingangsgrößen Prävalenz P, Nutzungsrisikoklasse NRK und Wärmeschutzklasse WSK anhand der Fuzzy-Zugehörigkeitsfunktionen bereits beschrieben wurde.

Mit den gemäß dem erfindungsgemäßen Verfahren ermittelten fuzzifizierten Funktionswerte (Zugehörigkeitsgrade) der Prävalenz der Feuchteschäden $\mu_{niedrig}$($P_{FS}$), $\mu_{mit-tel}$($P_{FS}$), $\mu_{hoch}$($P_{FS}$) bzw. der Schimmelpilzschäden $\mu_{niedrig}$($P_{SPS}$), $\mu_{mittel}$($P_{SPS}$), $\mu_{hoch}$($P_{SPS}$), der Nutzungsrisikoklasse $\mu_{niedrig}$(NRK), $\mu_{mittel}$(NRK), $\mu_{hoch}$(NRK) und der Wärmeschutzklasse des Gebäudes $\mu_{niedrig}$(WSK), $\mu_{mittel}$(WSK), $\mu_{hoch}$(WSK) wird anschließend eine Fuzzy-Inferenz (Verarbeitung) anhand einer Regelbasis gebildet. Die Fuzzy-Inferenz verarbeitet die einzelnen Zugehörigkeitsgrade zu (ebenfalls unscharfen) Ausgangsgrößen $\mu_{niedrig}$, $\mu_{mittel}$, $\mu_{hoch}$ führt, die eine niedrige, mittlere und hohe Wahrscheinlichkeit für das Eintreten des Ereignisses (hier also des Feuchte- und Schimmelpilzschadens) quantifiziert angeben.

Die Regelbasis der Fuzzy-Inferenz weist den Zugehörigkeitsfunktionen der zu ermittelnden Zielgröße ausgehend von den Funktionswerten der der zuvor beschriebenen Zugehörigkeitsfunktionen bestimmte Werte zu.

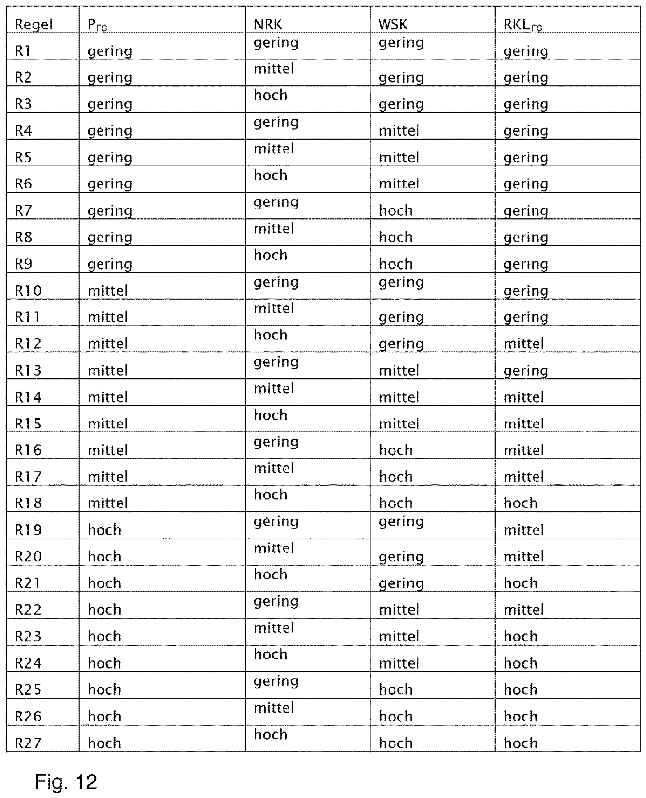

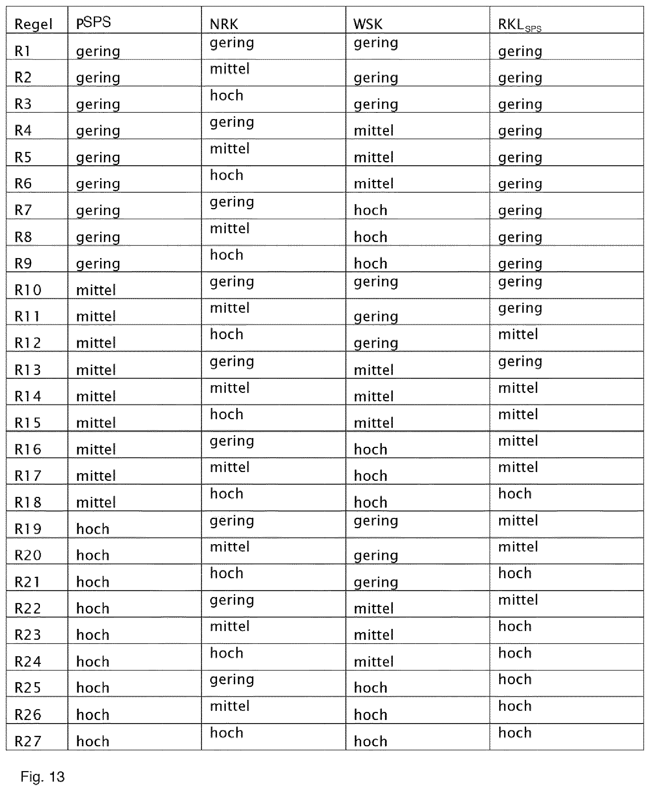

Eine beispielhafte Regelbasis ist (mit der Anschaulichkeit halber textlich beschriebenen Werten der Zugehörigkeitsfunktionen) in Fig. 12 als Regelbasis zur Ermittlung der Risikoklasse für Feuchteschäden bzw. in Fig.13 als Regelbasis zur Ermittlung der Risikoklasse für Schimmelpilzschäden dargestellt.

Die Eingangsgrößen zur Durchführung der Fuzzy-Inferenz anhand der Regelbasis bilden die Werte der Zugehörigkeitsfunktionen für die Prävalenz für Feuchteschäden $P_{FS}$, die Werte der Zugehörigkeitsfunktionen der Nutzungsrisikoklasse NRK und die Werte der Zugehörigkeitsfunktionen der Wärmeschutzklasse WSK. Für bestimmte Wertepaarkombinationen lassen sich hier Werte der Zugehörigkeitsfunktionen für die Risikoklasse Feuchteschäden $RKL_{FS}$ ablesen (rechte Spalte der Tabelle gemäß Fig. 12). Programmtechnisch kann dies dadurch erfolgen, dass bestimmten Wertebereichen der einzelnen Zugehörigkeitsfunktionen der Eingangsgrößen bestimmte Werte der Zugehörigkeitsfunktionen der Ausgangsgröße zugewiesen werden. Diese Wertebereiche sind in Fig. 12 zum besseren Verständnis textlich beschrieben.

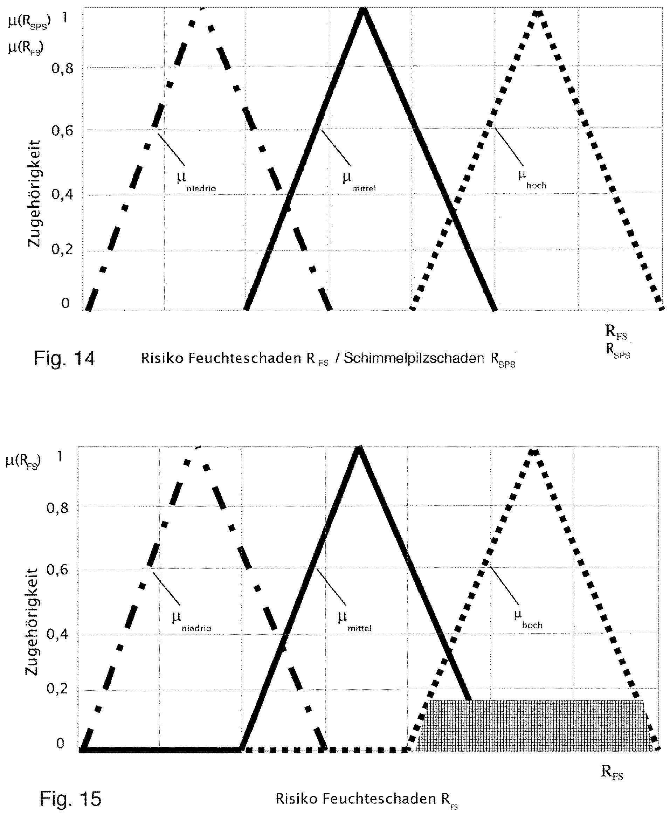

Nach Anwendung der Regelbasis in der Fuzzy-Inferenz stehen für die Zielgröße also die Werte der ihr zugewiesenen Zugehörigkeitsfunktionen fest. Dies sind für den hier beschriebenen Erwartungswert für die Wahrscheinlichkeit des Risikos von Schimmelpilzschäden $RKL_{SPS}$ bzw. Feuchteschäden $RKL_{FS}$ die in Fig. 14 dargestellten Zugehörigkeitsfunktionen.

Diese Funktionswerte werden einer Defuzzyfizierung zugeführt, die aus diesen Funktionswerten mittels grundsätzlich bekannter Verfahren, bspw. einer Schwerpunktmethode zur Gewichtung der einzelnen Funktionswerte einen genauen (scharf abgegrenzten) Wert für das Ergebnis der Wahrscheinlichkeit für einen Schimmelpilz- und/oder Feuchteschaden (respektive allgemeiner: für die Zielgröße) ermittelt. Dies muss an dieser Stelle nicht genauer beschrieben werden und liegt im Griffbereich des Fachmanns.

In der Fig. 14 entsprechenden Fig. 15 sind (für Feuchteschäden $R_{FS}$) die Zugehörigkeitsfunktionen mit der Markierung einer unscharfen Ergeignismenge dargestellt. Diese gibt einen gewissen Unsicherheitsbereich im Ergebnis an.

Die Ermittlung des Risikowerts RKL für die Schimmelpilz- und/oder Feuchteschadensrisiken mittels des erfindungsgemäßen Verfahrens erfolgt entsprechend einer Ausführungsform zyklisch, vorzugsweise stündlich, durch die zentrale Recheneinheit 3. Unter einer zyklischen Durchführung des vorgeschlagenen Verfahrens wird verstanden, dass das Verfahren jeweils zeitlich gesteuert nach bestimmten Zeitintervallen (Zyklus-Intervalle) immer wieder durchgeführt wird. Die Zyklus-Intervalle können bspw. eine Stunde betragen. Dies ist eine sinnvolle Vorgabe für Liegenschaften, in denen sich regelmäßig Menschen aufhalten, wobei auch Zyklus-Intervalle zwischen 30 min und 5 Stunden sinnvoll sein können. Die Zyklus-Intervalle können auch variabel, bspw. eigenständig aufgrund vorgegebener Variablen innerhalb des vorgeschlagenen Verfahrens, bestimmt werden. Ein geeignetes Kriterium ist hierfür bspw. der Risikowert RKL für Schimmelpilz- und/oder Feuchteschadensrisiken selbst. Je höher der Risikowert ist, desto kürzer kann das Zyklus-Intervall gewählt werden, um bei hohem Risiko eine engmaschigere Überprüfung erreichen zu können.

Die zeitvariablen Eingangsgrößen relative Feuchte, die Feuchtedifferenz zwischen Innen- und Außenfeuchte und die Raumtemperatur werden - im Falle einer Mittelung der Werte - vorzugsweise im selben Zyklus, beispielsweise stündlich, gemittelt. Die erhaltenen Werte werden als "Stundenintervall-Wahrscheinlichkeit für Schimmelpilz- / Feuchteschadensrisiko" - im Folgenden als "Stundenintervalle" bezeichnet - gespeichert, und können im erfindungsgemäß vorgeschlagenen Verfahren dann über einen zweiten als Wochenzeitraum bezeichneten Zeitraum, vorzugsweise über 7 Tagen oder ggf. auch eine andere Anzahl von Tagen, ausgewertet. Dabei wird ermittelt, wie viele der Stundenintervalle im Vergleich zur Gesamtanzahl der Stundenintervalle für den betrachteten Zeitraum über einem für das erfindungsgemäße Verfahren festgelegten Grenzwert liegen.

Die Begriffe "Stundenintervall" und "Wochenzeitraum" geben zwar erfindungsgemäß bevorzugte Zeiträume wieder, gelten aber jeweils auch für andere Zeiträume als genau 1 Stunde bzw. genau 1 Woche. Der Klarheit halber werden dafür aber die Begriff "Stundenintervalle" und "Wochenzeitraum" auch unabhängig von der tatsächlichen Zeit beibehalten.

Zur weiteren Verbesserung des Verfahrens, insbesondere zur Vermeidung von Fehlalarmen bzw. Fehlanzeigen, können auch Risikoklassen festgelegt werden. Die Zugehörigkeit ermittelten Risikowerts zu einer Risikoklasse ergibt sich durch festlegbare Schwellwerte bzw. Grenzwerte für die jeweiligen Risikoklasse.

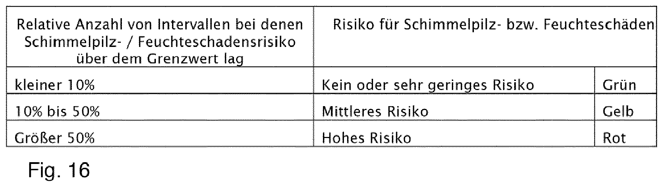

Die Einstufung der ermittelten "relativen Anzahl von Stundenintervallen mit Schimmelpilz- und/oder Feuchteschadensrisiko" erfolgt in vorzugsweise drei Risikoklassen, wobei Risikoklasse 1 "Kein oder sehr geringes Risiko", Risikoklasse 2 "Mittleres Risiko" und Risikoklasse 3 "Hohes Risiko" bedeuten können. Andere Bezeichnungen und/oder Anzahlen erfindungsgemäßer Risikoklassen sind im Rahmen einer erfindungsgemäßen Umsetzung möglich. Eine beispielhafte Festlegung der Risikoklassen ist in Tabelle der Fig. 16 dargestellt.

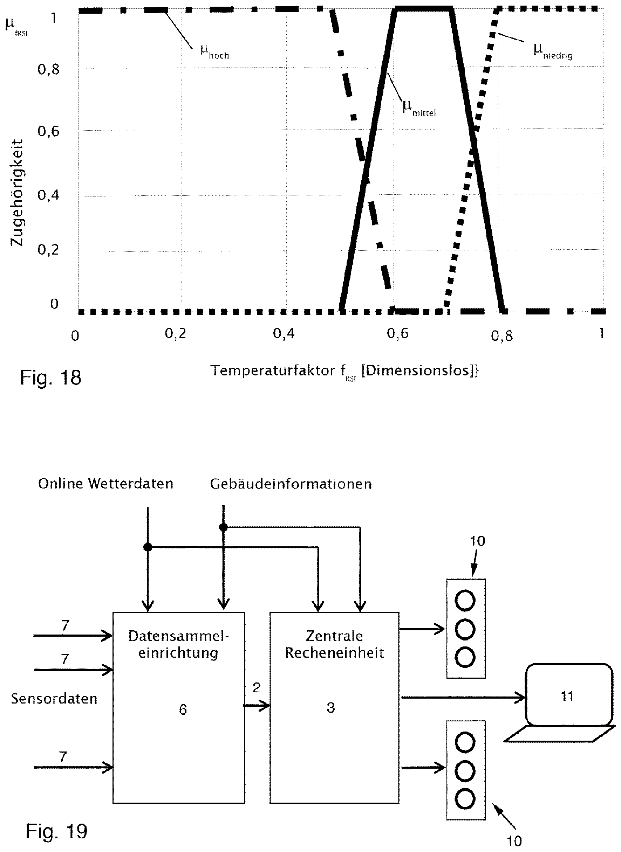

Den Risikoklassen wird vorzugsweise, da dies für den Anwender ein sehr einfach zu verstehendes Prinzip ist, ein Ampelsystem 10 zugeordnet: Risikoklasse 1 "Kein oder sehr geringes Risiko" entspricht GRÜN, Risikoklasse 2 "Mittleres Risiko" entspricht GELB und Risikoklasse 3 "Hohes Risiko" entspricht ROT. Dieses Ampelsystem ist als eine Anzeigemöglichkeit für das Endergebnis in Fig. 19 angedeutet.

Die Risikoklassen sind gekennzeichnet durch einen oberen und unteren Schwellwert bzw. Grenzwert. In der bevorzugten Ausführung des erfindungsgemäßen Verfahrens sind die Risikoklassen durch die folgende Regel definiert:

1) Die Risikoklasse 1 ist definiert durch die relative Anzahl der Stundenintervalle, in denen das Schimmelpilz- / Feuchteschadensrisiko über dem Grenzwert lag, ist unter 10%.

2) Die Risikoklasse 2 ist definiert durch die relative Anzahl der Stundenintervalle, in denen das Schimmelpilz- / Feuchteschadenrisiko über dem Grenzwert lag, ist zwischen 10% und 50%.

3) Die Risikoklasse 3 ist definiert durch die relative Anzahl der Stundenintervalle, in denen das Schimmelpilz- / Feuchteschadensrisiko über dem Grenzwert lag, ist höher als 50%.

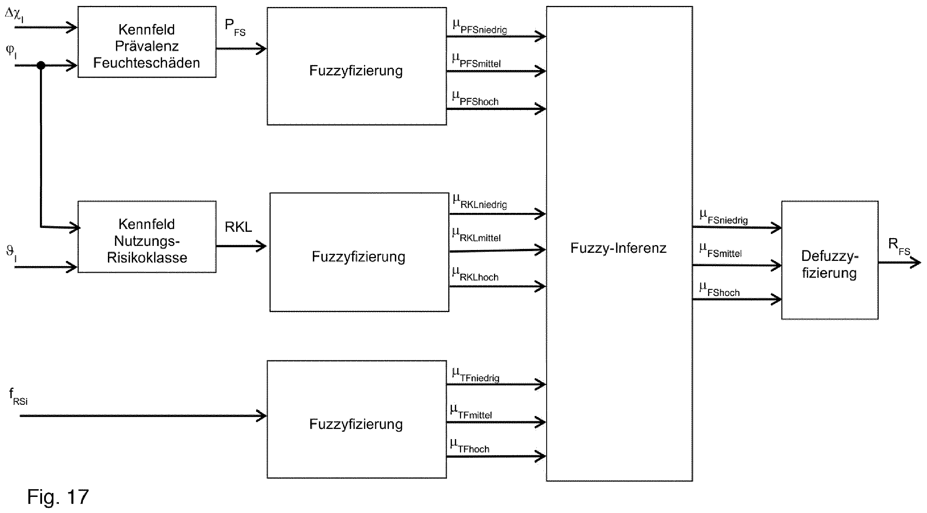

Fig. 17 zeigt eine weitere Ausführung des erfindungsgemäßen Verfahrens.

Diese Ausführungsform gemäß Fig. 17 entspricht vom Grundprinzip her den zuvor beschriebenen Ausführungsformen. Die vorstehende Beschreibung ist daher mit den beschriebenen Variationsmöglichkeiten auch für diese Ausführungsform gültig.

Anstelle der Größe Wärmeschutzklasse WSK gemäß den Fig. 3 oder 4 ff wird in dieser Ausführungform ein Temperaturfaktor $f_{RSI}$ als Eingangsgröße verwendet. Grundsätzlich wäre auch eine kombinierte Anwendung von Wärmeschutzklasse WSK und Temperaturfaktor $f_{RSI}$, bspw. als zwei nebeneinander stehende Eingangsgrößen, möglich.

Die zentrale Recheneinrichtung 3 ermittelt rechnerisch den Temperaturfaktor $f_{RSI}$ aus der gemessenen Außenlufttemperatur $\vartheta_A$, der vorzugsweise an der einem jeweiligen Innenraum zugeordneten Außenwand des Gebäudes gemessenen Wandoberflächentemperatur im Innenraum $\vartheta S_I$ und der Innenraumlufttemperatur $\vartheta_I$ nach folgender Formel:

$$f_{RSI} = \frac{\vartheta_{sI} - \vartheta_A}{\vartheta_I - \vartheta_A} = \frac{(\vartheta_I - \Delta\vartheta_{I-I}) - \vartheta_A}{\vartheta_I - \vartheta_A} = 1 - \frac{\Delta\vartheta_{sI-I}}{\vartheta_I - \vartheta_A},$$

wobei:

$\vartheta_{sI}$ Wandoberflächentemperatur im Innenraum (vorzugsweise einer Außenwand)
$\vartheta_I$ Innenraumlufttemperatur
$\vartheta_A$ Außenlufttemperatur

$\Delta\vartheta_{sI-I}$ Differenz zwischen Innenraumlufttemperatur und Innenwandoberflächentemperatur sind.

Der berechnete Temperaturfaktor $f_{RSI}$ bestimmt den aktuellen Arbeitspunkt für das erfindungsgemäße Verfahren und gibt eine rein rechnerische Abschätzung für den Wärmeschutz der Gebäude in dem Verfahren, unabhängig von dem Kenntnisstand der Wärmeschutzklasse. Insofern kann erfindungsgemäß zwischen der vorbeschriebenen Ausführungsform mit Berücksichtigung einer Wärmeschutzklasse, sofern diese bekannt ist, oder dem Bestimmen des Temperaturfaktors $F_{RSI}$ umgeschaltet werden, wenn die Wärmeschutzklasse des Gebäudes nicht bekannt oder aus vorhandenen Daten bestimmbar ist.

Der Temperaturfaktor $f_{RSI}$ kann gemäß der bevorzugten Ausführung Werte zwischen 0 (kein Wärmeschutz) und 1 (idealer Wärmeschutz) annehmen. Je größer der Temperaturfaktor ist, desto besser ist das Wärmeschutzniveau des Gebäudes.

Beispielsweise ergibt sich ein typischer Arbeitspunkt, bei einer Innenraumlufttemperatur $\vartheta_I$ von 20°C, einer Außenlufttemperatur $\vartheta_A$ von 5°C und einem Temperaturunterschied zwischen Innenraumlufttemperatur $\vartheta_I$ und Innenraum-Wandoberflächentemperatur von $\Delta\vartheta_{sI-I}$ = 3K mit der obigen Formel, ein Temperaturfaktor $f_{RSI}$ von 0,8:

$$f_{RSI} = 1 - \frac{\Delta\vartheta_{sI-I} \, (= 3K)}{\vartheta_I (= 20°C) - \vartheta_A (= 5°C)} = 0,8$$

Mit dem Temperaturfaktor $f_{RSI}$=0,8 und der Zugehörigkeitsfunktion für die Fuzzifizierung des Temperaturfaktors gemäß Fig. 18 ergibt sich der Zugehörigkeitsgrad $\mu_{TFhoch}$ = 0, $\mu_{TFmittel}$ = 0 $\mu_{TFniedrig}$ = 1. Grundsätzlich ist die Erfindung nicht auf diese konkrete Berechnung des Temperaturfaktors $f_{RSI}$ beschränkt.

Die weitere Durchführung des erfindungsgemäßen Verfahrens unter Verwendung der Fuzzy-Logik erfolgt analog der bereits beschriebenen ersten Ausführungsform.

Grundsätzlich können andere als die in den Figuren dargestellten Zuordnungsfunktionen für das erfindungsgemäße Verfahren verwendet werden, sofern diese entsprechend geeigneter fachmännischer Auswahl im Sinne des hier offenbarten Verfahrens für die Durchführung des Verfahrens geeignet sind.

Fig.19 zeigt schematisch das Blockschaltbild einer Vorrichtung zur Durchführung des Verfahrens mit Ausgabe der Ergebnisse in einer Anzeige, die als Ampel symbolisiert wird.

Die von den Datensammeleinrichtungen 6 empfangenen Sensordaten 7 zum Innenraumklima und zum Außenklima werden mittels der beschriebenen Datenübertragung 2 zyklisch von der Datensammeleinrichtung 6 zur zentralen Recheneinheit 3, bspw. dem Masterdatensammler 3.1 oder an ein IT-System im Sinne eines entfernten Leitstands 3.2 übertragen. Dazu können vorzugsweise Funktelegramme (wie SRD-Funk oder Mobilfunk zur Datenfernübertragung) eingesetzt werden.

Der Sendezyklus in der Datensammeleinrichtung 6 ist bspw. bei der Fertigung der Datensammeleinrichtung 6 einprogrammiert worden oder kann mittels Servicegerät oder per Download über eine Datenfernübertragung eingestellt werden.

Die Außenklimadaten werden mit geeigneten vorzugsweise funkfähigen Sensoren 5 möglichst zeitgleich zur Erfassung der Innenraumklimadaten messtechnisch erfasst und - sofern der Sensor 5 dies ermöglicht- mit einem Zeitstempel versehen. Die von den Außensensoren 5 mit einem Funktelegramm zyklisch übertragenen Gebäudeaußensensordaten 7 werden von der vorzugsweise im Gebäude installierten Datensammeleinrichtung 6 empfangen und an die zentrale Recheneinheit 3 unmittelbar oder über Repeater weitergeleitet und/oder die Gebäudeaußensensordaten 7 werden direkt von einer zentralen Recheneinheit 3, die dann im Gebäude installiert ist und über eine Funkempfangseinrichtung für die Funktelegramme der Sensoren 5 verfügt, empfangen.

Die vorzugsweise per Funkdatenübertragung übertragenen Raum- und Außenklimadaten werden in der zentralen Recheneinheit 3 zur Weiterverarbeitung abgespeichert. Die rechnerische Bestimmung von weiteren, für das erfindungsgemäße Verfahren notwendigen oder das Verfahren verbessernden Werten, bspw. von mit Kennzahlen bewertete Sensorwerte wie eine absolute Innenluftfeuchte und der absoluten Außenluftfeuchte, sowie der Feuchtedifferenz, die sich als Differenz von Innenluftfeuchte zu Außenluftfeuchte ergibt, erfolgt unter Verwendung der gemessenen und von den Sensoren 4, 5 ausgesendeten und vorliegenden Sensormesswerten in der zentralen Recheneinheit 3.

Mit den messtechnisch erfassten Daten werden durch die zentrale Recheneinheit 3 die für das erfindungsgemäße Verfahren zusätzlich zu den Messwerten benötigten Werte rechnerisch abgeleitet. Hierzu ist eine im Gebäude installierte zentrale Recheneinheit 3.1 mit einem Mikroprozessor und ausreichend Datenspeicher ausgestattet. Ist die zentrale Recheneinheit 3.2 als Teil des Leitstands oder des IT-Systems ausgebildet, so kann eine ausreichende Rechenleistung und Speicherkapazität als gegeben angenommen werden.

Das erfindungsgemäße Verfahren wird zyklisch, vorzugsweise stündlich, in der zentralen Recheneinheit 3 ausgeführt. Als Vorbedingung zur sinnvollen Durchführung des erfindungsgemäßen Verfahrens müssen jedoch hinreichend viele aktuelle Messwerte bzw. Mittelewerte der Sensoren 4, 5 im Datenspeicher der Zentraleinheit 3 vorliegen. Ist dies nicht der Fall, kann die Ausführung des erfindungsgemäßen Verfahrens solange verzögert werden, bis ausreichend viele Sensordaten 7 vorhanden sind.

Durch die Zuordnung der Sensoren 4 zu Räumen und/oder Nutzeinheiten (Wohnung, Gewerberäume) über beispielsweise in der zentralen Recheneinheit 3 abgelegte Zuordnungslisten (Nutzeinheiten-Nummer; Sensoridentifikations-Nummer 1 ... bis Sensoridentifikations-Nummer n) wird eine raum- und/oder nutzeinheitenbezogene Darstellung der Ergebnisse des erfindungsgemäßen Verfahrens ermöglicht.

Die Vorrichtung zur Durchführung des erfindungsgemäßen Verfahren ermöglicht die Darstellung von Warnhinweisen an den Nutzer und/oder einer Aufschaltung auf die Regelung von Lüftungsanlagen und/oder als Eingangsgröße für Gebäudeautomation der mit dem erfindungsgemäßen Verfahren gewonnen Ergebnisse für eine zuverlässige Vorhersage des Schimmelpilz- und/oder Feuchteschadenrisikos.

Die Signalisierung der Schimmelpilz- und/oder Feuchteschadensrisiken für einen Nutzer kann beispielsweise über ein sogenanntes Inhome-Display 11 erfolgen, das in einer Nutzeinheiten (Wohnung, Gewerberäume) installiert sein kann. Die Information der Nutzer und / oder für das Gebäudemanagement, und damit für den Eigentümer oder den Hausverwalter (Betreiber), erfolgt vorzugsweise über die Ampelsignalisierung ROT, GELB, GRÜN bzw. 1,2,3.

## Bezugszeichen

1     Vorrichtung zur Ermittlung der Wahrscheinlichkeit für einen Schimmelpilz- und/oder Feuchteschaden in einem Gebäude
2     Datenübertragung
3     zentrale Recheneinheit
3.1     lokaler Masterdatensammler (lokale zentrale Datensammeleinrichtung)
3.2     entfernte zentrale Recheneinheit (entfernte zentrale Datensammeleinrichtung)
4     erste Sensoren zur Erfassung von Raumklimadaten (Temperatur, Innenraumfeuchte)
5     zweite Sensoren zur Erfassung von Außenklimadaten
6     Datensammeleinrichtung
7     Sensordaten
8     Vorrichtung zur Datenfernübertragung
9     Vorverarbeitungseinrichtung, insbesondere Mittelwertbildung
10     Ampelsystem
11     Inhome-Display

## Patentansprüche

**1.** Verfahren zur Ermittlung der Wahrscheinlichkeit für einen Schimmelpilz- und/oder Feuchteschaden in einem Gebäude mit folgenden Verfahrensschritten:

- Erfassen von Raumklimadaten mittels Sensoren (4),

- Ableiten von das Raumklima charakterisierenden Kennwerten aus den erfassten Raumklimadaten,

- Ermitteln der Wahrscheinlichkeit für einen Schimmelpilz- und/oder Feuchteschaden durch Bewerten der Kennwerte,

wobei die Bewertung der Kennwerte anhand mindestens einer Wahrscheinlichkeitstabelle erfolgt, welche einen Wahrscheinlichkeitswert für Schimmelpilz- und/oder Feuchteschäden in Abhängigkeit von mindestens zwei Kennwerten aufgrund empirischer Erfahrungswerte vorgibt, **gekennzeichnet durch** das

- Erfassen von Außenklimadaten mittels Sensoren (5) oder Online-Wetterdaten

- Ableiten von das Raumklima charakterisierenden Kennwerten aus den erfassten Raumklima- und Außenklimadaten,

wobei eine erste der mindestens einen Wahrscheinlichkeitstabelle in Abhängigkeit der Kennwerte Innenraumluftfeuchte und Feuchtedifferenz aus Innenraumluftfeuchte und Außenluftfeuchte geführt ist und

wobei eine zweite Wahrscheinlichkeitstabelle die Wahrscheinlichkeit für das Auftreten von Schimmelpilz- und/oder Feuchteschäden in Abhängigkeit eines Nutzerverhaltens bewertet, das sich in einer Variation der Raumtemperatur in einem üblichen Raumtemperaturbereich entsprechend persönlicher Vorlieben und in der relativen Innenraumluftfeuchte wiederspiegelt, und

wobei die erste und die zweite Wahrscheinlichkeitstabelle zusammen eingesetzt werden.

2. Verfahren nach Anspruch 1, **dadurch gekennzeichnet, dass** mindestens eine der Wahrscheinlichkeitstabellen in Abhängigkeit der Kennwerte Innenraumlufttemperatur und Innenraumluftfeuchte geführt ist.

3. Verfahren nach Anspruch 1 oder 2, **dadurch gekennzeichnet, dass** die mindestens eine der Wahrscheinlichkeitstabellen als zweidimensionales Prävalenzkennfeld geführt wird.

4. Verfahren nach einem der vorhergehenden Ansprüche, **dadurch gekennzeichnet, dass** ein Wertebereich mindestens eines der Kennwerte einer Wahrscheinlichkeitstabelle in Quantile, insbesondere Tertile oder Quartile, eingeteilt wird.

5. Verfahren nach einem der vorhergehenden Ansprüche, **dadurch gekennzeichnet, dass** ein Kennwert für die Wärmedämmung des Gebäudes berücksichtigt wird.

6. Verfahren nach Anspruch 5, **dadurch gekennzeichnet, dass** der Kennwert für die Wärmedämmung des Gebäudes ein durch erfasste Sensordaten (7) berechenbarer Temperaturfaktor ist, in den mindestens zwei der nachstehenden Sensordaten (7) oder aus den Sensordaten (7) abgeleiteten Kennwerte eingehen:

   - Innenraumlufttemperatur $\vartheta_I$
   - Außentemperatur $\vartheta_A$
   - Wandoberflächentemperatur $\vartheta_{sI}$
   - Differenz zwischen Innenraumlufttemperatur und Innenwandoberflächentemperatur $\Delta\vartheta_{sI-I}$

7. Verfahren nach einem der vorhergehenden Ansprüche, **dadurch gekennzeichnet, dass** zur Ermittlung der Wahrscheinlichkeit für einen Schimmelpilz- und/oder Feuchteschaden in einem Gebäude mehrere Kennwerte und/oder aus einer Wahrscheinlichkeitstabelle entnommene Wahrscheinlichkeitswerte verwendet werden, wobei die mehreren Kennwerte oder Wahrscheinlichkeitswerte mittels einer Fuzzy-Logik bewertet und zu einer Gesamtwahrscheinlichkeit kombiniert werden.

8. Verfahren nach Anspruch 7, **dadurch gekennzeichnet, dass** bei der Anwendung der Fuzzy-Logik jedem zu bewertenden Kennwert oder Wahrscheinlichkeitswert mindestens drei Zugehörigkeitsgrade zugewiesen werden, die einen hohen, mittleren und niedrigen Einfluss auf den Eintritt eines Schadensereignisses quantifizieren und aus vorgegebenen Zugehörigkeitsfunktionen für einen hohen, mittleren und niedrigen Einfluss abgelesen werden.

9. Verfahren nach einem der vorhergehenden Ansprüche, **dadurch gekennzeichnet, dass** die Wahrscheinlichkeit für einen Schimmelpilz- und/oder Feuchteschaden durch Bewertung der Kennwerte jeweils einmal in Bewertungszeitraum durchgeführt wird.

10. Verfahren nach einem der vorhergehenden Ansprüche, **dadurch gekennzeichnet, dass** das Verfahren zur Ermittlung der Wahrscheinlichkeit für einen Schimmelpilz- und/oder Feuchteschaden durch Bewertung der Kennwerte in aufeinander folgenden Bewertungszeiträumen mehrfach durchgeführt worden sein muss, bevor das Ergebnis des Verfahrens ausgebeben wird.

11. Verfahren nach einem der vorhergehenden Ansprüche, **dadurch gekennzeichnet, dass** mit einer entsprechenden Sensoreinrichtung ausgestattete Heizkostenverteiler, Rauchwarnmelder oder internetfähige Sensorgeräte zur Erfassung von Sensordaten verwendet werden.

**12.** Verfahren nach einem der vorhergehenden Ansprüche, **dadurch gekennzeichnet, dass** die Sensordaten (7) durch ein Sensorgerät (4, 5) vor der Übertragung an eine zur Durchführung des Verfahrens eingerichtete zentrale Recheneinheit (3) oder auf dem Übertragungsweg an die zentrale Recheneinheit (3) in einer Datensammeleinrichtung (6) bearbeitet werden.

**13.** Vorrichtung zur Ermittlung der Wahrscheinlichkeit für einen Schimmelpilz- und/oder Feuchteschaden in einem Gebäude mit Sensorgeräten (4) zur Erfassung von Raumklimadaten, Kommunikationseinrichtungen zur drahtlosen Datenübertragung, mindestens einer Datensammeleinrichtung (6) zum Empfangen von Daten der Sensorgeräte (4, 5) und/oder von Online-Wetterdaten und Aussenden der Daten an eine zentrale Recheneinheit (3), **dadurch gekennzeichnet, dass** die zentrale Recheneinheit (3), die Sensorgeräte (4, 5) und die mindestens eine Datensammeleinrichtung (6) jeweils eine Prozessoreinheit aufweisen, die zur Durchführung des Verfahrens nach einem der Ansprüche 1 bis 12 eingerichtet sind.

**14.** Vorrichtung nach Anspruch 13, **dadurch gekennzeichnet, dass** die Vorrichtung Sensorgeräte (5) zur Erfassung von Außenklimadaten aufweist.

**Claims**

**1.** A method for determining the probability of mold and/or moisture damage in a building, with the following procedural steps:

- Acquiring indoor climate data by means of sensors (4),
- Deriving characteristic values that describe the indoor climate from the acquired indoor climate data,
- Determining the probability of mold and/or moisture damage by evaluating the characteristic values,
wherein the characteristic values are evaluated based upon at least one probability table, which specifies a probability value for mold and/or moisture damage as a function of at least two characteristic values based upon empirical data, **characterized by**
- Acquiring outdoor climate data by means of sensors (5) or online weather data
- Deriving characteristic values that describe the indoor climate from the acquired indoor climate and outdoor climate data,
wherein a first of the at least one probability table is kept as a function of the characteristic values indoor humidity and moisture difference between indoor humidity and outdoor humidity, and
wherein a second probability table accesses the probability that mold and/or moisture damage will arise as a function of user behavior, as reflected in a variation in room temperature within a usual room temperature range based on personal preferences, and in the relative indoor moisture, and
wherein the first and the second probability tables are used together.

**2.** The method according to claim 1, **characterized in that** at least one of the probability tables is kept as a function of the characteristic values indoor air temperature and indoor humidity.

**3.** The method according to claim 1 or 2, **characterized in that** the at least one of the probability tables is kept as a two-dimensional prevalence map.

**4.** The method according to one of the preceding claims, **characterized in that** a value range of at least one of the characteristic values of a probability table is divided into quantiles, in particular tertiles or quartiles.

**5.** The method according to one of the preceding claims, **characterized in that** a characteristic value for the thermal insulation of the building is considered.

**6.** The method according to claim 5, **characterized in that** the characteristic value for the thermal insulation of the building is a temperature factor that can be calculated using acquired sensor data (7), and incorporates at least two of the sensor data (7) or characteristic values derived from the sensor data (7):

- Indoor air temperature $\vartheta_I$
- Outdoor temperature $\vartheta_A$
- Wall surface temperature $\vartheta_{sI}$
- Difference between the indoor air temperature and inner wall surface temperature $\Delta\vartheta_{sI-I}$.

**7.** The method according to one of the preceding claims, **characterized in that** several characteristic values and/or probability values derived from a probability table are used to determine the probability of mold and/or moisture damage in a building, wherein the several characteristic values or probability values are evaluated by means of fuzzy logic and combined into an overall probability.

**8.** The method according to claim 7, **characterized in that**, when applying fuzzy logic, each characteristic value or probability value to be evaluated has allocated to it at least three affiliation degrees, which quantify a high, medium, and low influence on the occurrence of a damage event, and are read off from specified affiliation functions for a high, medium, and low influence.

9. The method according to one of the preceding claims, **characterized in that** the probability of mold and/or moisture damage is determined by evaluating the characteristic values once in a respective evaluation period.

10. The method according to one of the preceding claims, **characterized in that** the method for determining the probability of mold and/or moisture damage by evaluating the characteristic values in sequential evaluation periods must have been implemented multiple times before the result of the method is output.

11. The method according to one of the preceding claims, **characterized in that** heat cost allocators, smoke detectors or internet-enabled sensor devices equipped with a corresponding sensor apparatus are used for acquiring sensor data.

12. The method according to one of the preceding claims, **characterized in that** the sensor data (7) are processed by a sensor device (4, 5) in a data collection device (6) prior to transfer to a central processing unit (3) set up to implement the method or on the transfer path to the central processing unit (3).

13. A device for determining the probability of mold and/or moisture damage in a building, with sensor devices (4) for acquiring indoor climate data, communication apparatuses for wireless data transfer, at least one data collection device (6) for receiving data from the sensor device (4, 5) and/or online weather data, and transmitting the data to a central processing unit (3), **characterized in that** the central processing unit (3), sensor devices (4, 5) and at least one data collection device (6) each have a processor unit, which is set up to implement the method according to one of claims 1 to 12.

14. The device according to claim 13, **characterized in that** the device has sensor units (5) for acquiring outdoor climate data.

**Revendications**

1. Procédé pour la détermination de la probabilité de dommages dus à la moisissure et/ou à l'humidité dans un bâtiment avec les étapes de procédé suivantes :

- saisie des données de climat ambiant au moyen de détecteurs (4),
- dérivation des valeurs caractéristiques caractérisant le climat ambiant à partir des données de climat ambiant saisies,
- détermination de la probabilité de dommages dus à la moisissure et/ou à l'humidité en évaluant les valeurs caractéristiques,
sachant que l'évaluation des valeurs caractéristiques a lieu à l'aide d'au moins un tableau de probabilités, lequel prédéfinit une valeur de probabilité pour les dommages dus à la moisissure et/ou à l'humidité en fonction d'au moins deux valeurs caractéristiques sur la base de valeurs expérimentales empiriques, **caractérisé par**
- la saisie de données de climat extérieur au moyen de détecteurs (5) ou de données météorologiques en ligne,
- la dérivation de valeurs caractéristiques caractérisant le climat des pièces à partir des données climat ambiant et extérieur saisies,
sachant qu'au moins un premier tableau de probabilités est géré en fonction des valeurs caractéristiques, humidité de l'air ambiant d'intérieur et différence d'humidité, entre l'humidité de l'air ambiant intérieur et l'humidité de l'air extérieur, et
sachant qu'un deuxième tableau de probabilités évalue la probabilité pour l'apparition de dommages dus à la moisissure et/ou à l'humidité en fonction d'un comportement d'utilisateurs, qui se reflète dans une variation de la température ambiante dans une gamme de températures ambiantes habituelle correspondant à des préférences personnelles et dans l'humidité relative de l'air ambiant intérieur, et
sachant que le premier et le deuxième tableau de probabilités sont utilisés ensemble.

2. Procédé selon la revendication 1, **caractérisé en ce qu'**au moins un des tableaux de probabilités est géré en fonction des valeurs caractéristiques de température de l'air ambiant intérieur et de l'humidité de l'air ambiant intérieur.

3. Procédé selon la revendication 1 ou 2, **caractérisé en ce qu'**au moins un des tableaux de probabilités est géré comme champ caractéristique de prévalence bidimensionnel.

4. Procédé selon l'une quelconque des revendications précédentes, **caractérisé en ce qu'**
une gamme de valeurs au moins d'une des valeurs caractéristiques d'un tableau de probabilités est répartie en quantiles, tertiles ou quartiles.

5. Procédé selon l'une quelconque des revendications précédentes, **caractérisé en ce qu'**une valeur caractéristique est prise en considération pour l'isolation thermique du bâtiment.

**6.** Procédé selon la revendication 5, **caractérisé en ce que** la valeur caractéristique pour l'isolation thermique du bâtiment est un facteur de température calculable par des données de détection saisies (7) dans lequel entrent au moins deux des données de détection (7) suivantes ou des valeurs caractéristiques dérivées des données de détection (7) :

- température de l'air ambiant intérieur $\vartheta_I$,
- température extérieure $\vartheta_A$,
- température de la surface de paroi $\vartheta_{SI}$,
- différence entre température de l'air ambiant intérieur et la température de la surface de paroi $\Delta\vartheta_{SI-I}$.

**7.** Procédé selon l'une quelconque des revendications précédentes, **caractérisé en ce que** plusieurs valeurs caractéristiques et/ou des valeurs de probabilité tirées d'un tableau de probabilités sont utilisées pour la détermination de la probabilité de dommages dus à la moisissure et/ou à l'humidité dans un bâtiment, sachant que les nombreuses valeurs caractéristiques ou valeurs de probabilité sont évaluées au moyen d'une logique floue et combinées en une probabilité totale.

**8.** Procédé selon la revendication 7, **caractérisé en ce que** lors de l'utilisation de la logique floue, au moins trois degrés d'appartenance sont attribués à chaque valeur caractéristique ou valeur de probabilité à évaluer, qui quantifient un effet élevé, moyen et faible sur la survenance d'un événement de dommages et sont relevés à partir des fonctions d'appartenance prédéfinies pour un effet élevé, moyen et faible.

**9.** Procédé selon l'une quelconque des revendications précédentes, **caractérisé en ce que** la probabilité de dommages dus à la moisissure et/ou à l'humidité, est respectivement réalisée une fois par l'évaluation des valeurs caractéristiques dans une période de temps d'évaluation.

**10.** Procédé selon l'une quelconque des revendications précédentes, **caractérisé en ce que** le procédé pour la détermination de la probabilité de dommages dus à la moisissure et/ou à l'humidité doit avoir été effectué plusieurs fois par l'évaluation des valeurs caractéristiques dans des périodes de temps d'évaluation successives, avant que le résultat du procédé soit édité.

**11.** Procédé selon l'une quelconque des revendications précédentes, **caractérisé en ce que** un répartiteur des frais de chauffage, équipé d'un système de détection correspondant, un détecteur de fumée ou des appareils de détection compatibles Internet sont utilisés pour la saisie des données de détection.

**12.** Procédé selon l'une quelconque des revendications précédentes, **caractérisé en ce que** les données de détection (7) sont traitées par un appareil de détection (4, 5) avant la transmission à une unité de calcul (3) centrale agencée pour exécuter le procédé ou par voie de transmission à l'unité de calcul centrale (3) dans un système de collecte de données (6).

**13.** Dispositif pour la détermination de la probabilité de dommages dus à la moisissure et/ou l'humidité dans un bâtiment avec des appareils de détection (4) pour la saisie de données de climat ambiant, des systèmes de communication pour la transmission de données sans fil, au moins un système de collecte de données (6) pour la réception de données des appareils de détection (4, 5) et/ou de données météorologiques en ligne et l'envoi de données à une unité de calcul centrale (3), **caractérisé en ce que** l'unité de calcul centrale (3), les appareils de détection (4, 5) et au moins un système de collecte de données (6) comportent respectivement une unité à processeur, qui est agencée pour réaliser le procédé selon l'une quelconque des revendications 1 à 12.

**14.** Procédé selon la revendication 13, **caractérisé en ce que** le dispositif comporte des appareils de détection (5) pour la saisie des données de climat extérieur.

Fig. 1

Relative Luftfeuchtigkeit

1/3 der erhobenen sortierten Werte

T0

T1

T2

Feuchtedifferenz

Fig. 2

Fig. 3

Fig. 4

EP 3 602 146 B1

## Fig. 5

| Tertile<br>relativen Raumluftfeuchte $\varphi_i$ [%] | Tertile der Feuchtedifferenz<br>$\Delta\chi$ [g/kg] | | |
|---|---|---|---|
| | T0:<br><1 | T1:<br>>=1 und <2 | T2:<br>>=2 |
| T0: < 40 | 0 | 6 | 25 |
| T1: >=40 und <50 | 20 | 11 | 43 |
| T2: >=50 | 15 | 50 | 48 |

## Fig. 6

| Tertile<br>relativen Raumluftfeuchte $\varphi_i$ [%] | Tertile der Feuchtedifferenz<br>$\Delta\chi$ [g/kg] | | |
|---|---|---|---|
| | T1:<br><1 | T2:<br>>=1 und <2 | T3:<br>>=2 |
| T1: < 42 | 0 | 6 | 25 |
| T2: >=42 und <50 | 6 | 5 | 43 |
| T3: >=50 | 14 | 28 | 34 |

Fig. 7

Prävalenz für Schimmelpilzschäden $P_{SPS}$ / Feuchteschäden $P_{FS}$

| Raumlufttemperatur $\vartheta_i$ [°C] | Relative Raumluftfeuchte $\varphi_i$ [%] | | | |
|---|---|---|---|---|
| | Q1: 0 | Q2; 50 | Q3; 70 | Q4: 100 |
| Q1: <16°C | 0 | 3 | 6 | 9 |
| Q2: 16°C .. 18°C | 2 | 5 | 8 | 11 |
| Q3: 18°C .. 22°C | 4 | 7 | 10 | 13 |
| Q4: >22°C | 6 | 9 | 12 | 15 |

Fig. 8

Fig. 9

| Wohnfläche [m²] | Energieträger zur Heizwärmeerzeugung | Energieverbrauchs-kennwert Raumheizung [kWh/m² per anno] | Wärmeschutzklasse WSK |
|---|---|---|---|
| < 450 | Fernwärme | > 140 | niedrig |
| | | 110-140 | mittel |
| | | < 110 | hoch |

Fig. 10

Fig. 11

| Regel | $P_{FS}$ | NRK | WSK | $RKL_{FS}$ |
|---|---|---|---|---|
| R1 | gering | gering | gering | gering |
| R2 | gering | mittel | gering | gering |
| R3 | gering | hoch | gering | gering |
| R4 | gering | gering | mittel | gering |
| R5 | gering | mittel | mittel | gering |
| R6 | gering | hoch | mittel | gering |
| R7 | gering | gering | hoch | gering |
| R8 | gering | mittel | hoch | gering |
| R9 | gering | hoch | hoch | gering |
| R10 | mittel | gering | gering | gering |
| R11 | mittel | mittel | gering | gering |
| R12 | mittel | hoch | gering | mittel |
| R13 | mittel | gering | mittel | gering |
| R14 | mittel | mittel | mittel | mittel |
| R15 | mittel | hoch | mittel | mittel |
| R16 | mittel | gering | hoch | mittel |
| R17 | mittel | mittel | hoch | mittel |
| R18 | mittel | hoch | hoch | hoch |
| R19 | hoch | gering | gering | mittel |
| R20 | hoch | mittel | gering | mittel |
| R21 | hoch | hoch | gering | hoch |
| R22 | hoch | gering | mittel | mittel |
| R23 | hoch | mittel | mittel | hoch |
| R24 | hoch | hoch | mittel | hoch |
| R25 | hoch | gering | hoch | hoch |
| R26 | hoch | mittel | hoch | hoch |
| R27 | hoch | hoch | hoch | hoch |

Fig. 12

| Regel | pSPS | NRK | WSK | RKL$_{SPS}$ |
|-------|------|-----|-----|-----|
| R1 | gering | gering | gering | gering |
| R2 | gering | mittel | gering | gering |
| R3 | gering | hoch | gering | gering |
| R4 | gering | gering | mittel | gering |
| R5 | gering | mittel | mittel | gering |
| R6 | gering | hoch | mittel | gering |
| R7 | gering | gering | hoch | gering |
| R8 | gering | mittel | hoch | gering |
| R9 | gering | hoch | hoch | gering |
| R10 | mittel | gering | gering | gering |
| R11 | mittel | mittel | gering | gering |
| R12 | mittel | hoch | gering | mittel |
| R13 | mittel | gering | mittel | gering |
| R14 | mittel | mittel | mittel | mittel |
| R15 | mittel | hoch | mittel | mittel |
| R16 | mittel | gering | hoch | mittel |
| R17 | mittel | mittel | hoch | mittel |
| R18 | mittel | hoch | hoch | hoch |
| R19 | hoch | gering | gering | mittel |
| R20 | hoch | mittel | gering | mittel |
| R21 | hoch | hoch | gering | hoch |
| R22 | hoch | gering | mittel | mittel |
| R23 | hoch | mittel | mittel | hoch |
| R24 | hoch | hoch | mittel | hoch |
| R25 | hoch | gering | hoch | hoch |
| R26 | hoch | mittel | hoch | hoch |
| R27 | hoch | hoch | hoch | hoch |

Fig. 13

Fig. 14      Risiko Feuchteschaden $R_{FS}$ / Schimmelpilzschaden $R_{SPS}$

Fig. 15      Risiko Feuchteschaden $R_{FS}$

| Relative Anzahl von Intervallen bei denen Schimmelpilz- / Feuchteschadensrisiko über dem Grenzwert lag | Risiko für Schimmelpilz- bzw. Feuchteschäden | |
|---|---|---|
| kleiner 10% | Kein oder sehr geringes Risiko | Grün |
| 10% bis 50% | Mittleres Risiko | Gelb |
| Größer 50% | Hohes Risiko | Rot |

Fig. 16

Fig. 17

Fig. 18

Temperaturfaktor $f_{RSI}$ [Dimensionslos]}

Fig. 19

**IN DER BESCHREIBUNG AUFGEFÜHRTE DOKUMENTE**

**In der Beschreibung aufgeführte Patentdokumente**

- DE 102008061087 A1
- DE 202007013797 A1
- DE 102007045116 A1
- JP H11276194 A
- US 2005156746 A1